# EUROPEAN PATENT APPLICATION

(11) **EP 4 224 735 A1**
(43) Date of publication of application: **09.08.2023**
(21) Application number: 21893486.7
(22) Date of filing: 23.08.2021
(51) Int. Cl.: H04B 7/06

(54) **BEAM ALIGNMENT METHOD, INFORMATION TRANSMISSION METHOD, AND RELATED DEVICE**

(30) Priority: 23.11.2020 CN 202011320759
(71) Applicant: Huawei Technologies Co., Ltd., Shenzhen, Guangdong 518129 (CN)
(72) Inventor: HE, Chao, Shenzhen, Guangdong 518129 (CN); ZENG, Yan, Shenzhen, Guangdong 518129 (CN)
(74) Representative: Isarpatent
(86) International application number: PCT/CN2021/113993
(87) International publication number: WO 2022/105334

(57) **Abstract**

Embodiments of this application relate to the communication field, and disclose a beam alignment method, an information transmission method, and a related device, to improve beam alignment accuracy and beam alignment efficiency. In the method in embodiments of this application, an access point device receives a first message, then determines, based on the first message, information about a first beam pointing to a target terminal device, and aligns an antenna beam of the access point device with the target terminal device based on the information about the first beam. Next, the terminal device receives a second message, determines information about a second beam pointing to the target access point device, and aligns an antenna beam of the terminal device with the target access point device based on the information about the second beam.

## Description

This application claims priority to Chinese Patent Application No. 202011320759.X, filed with the China National Intellectual Property Administration on November 23, 2020 and entitled "BEAM ALIGNMENT METHOD, INFORMATION TRANSMISSION METHOD, AND RELATED DEVICE", which is incorporated herein by reference in its entirety.

### TECHNICAL FIELD

Embodiments of this application relate to the communication field, and in particular, to a beam alignment method, an information transmission method, and a related device.

### BACKGROUND

Due to a large path loss in millimeter wave communication, a narrow-beam antenna is usually used to improve a directional gain, to compensate for a loss on a propagation path. When transmit and receive beams of the narrow-beam antenna are aligned, a system obtains a highest antenna gain and has optimal transmission performance. In addition, because a terminal device moves, beam scanning may further be periodically performed when service data is transmitted, and optimal beam selection and feedback are performed on a receiver side, so as to track a transmit beam. After an optimal transmit beam is obtained through adjustment, receive beams need to be traversed to obtain an optimal receive beam, so that an entire receive and transmit link has optimal performance.

Currently, in millimeter wave wireless fidelity (Wireless Fidelity, Wi-Fi) beam alignment, an access point (Access Point, AP) device periodically sends a downlink sweep frame. Different slots of the sweep frame are formed by concatenating signal segments to which different beams point, so that omnidirectional beam scanning can be performed. A station (Station, STA) is connected to a terminal device in millimeter wave Wi-Fi. The STA obtains sent signals in different directions by receiving signal frames that are in different time periods, and then feeds back received signal-to-noise ratios in the different directions to the AP device. In this way, a rough downlink transmission direction is obtained. After rough alignment is completed, narrower beam scanning is performed on the roughly aligned direction, so as to determine an accurate downlink sending direction. Finally, the STA searches for an uplink sending direction through a scanning mechanism that is the same as that in a downlink, to complete alignment of the receive and transmit beams.

However, a large quantity of slots are needed for scanning and alignment during continuous tracking, and this reduces an ultimate bandwidth. When tracking is slow, misalignment between beam occurs. In addition, in a scenario of a plurality of access point devices, an access point device to which handover is to be performed needs to perform initial search again, and this causes service interruption. Consequently, beam alignment accuracy is reduced, and beam alignment efficiency is reduced.

### SUMMARY

Embodiments of this application provide a beam alignment method, an information transmission method, and a related device, to improve beam alignment accuracy and beam alignment efficiency.

According to a first aspect, this application provides a beam alignment method. The method may be performed by an access point device, or may be performed by a chip configured in the access point device. This is not limited in this application. The method includes: An access point device receives a first message, then determines, based on the first message, information about a first beam pointing to a target terminal device, and aligns an antenna beam of the access point device with the target terminal device based on the information about the first beam.

In this implementation, the information about the first beam pointing to the target terminal device is determined based on the first message, and a large quantity of slots for scanning and alignment are not needed. Therefore, an ultimate bandwidth is ensured. Even if tracking is slow, the determined information about the beam pointing to the target terminal device is also accurate, so that beam alignment accuracy is improved. Second, in a scenario of a plurality of access point devices, when handover to an access point device is performed, initial search does not need to be performed, and the obtained information about the first beam points to the target terminal device. Therefore, a service of the target terminal device is not affected, thereby improving beam alignment efficiency.

In an optional implementation of this application, the first message includes location information of the terminal device. Therefore, the access point device may determine the information about the first beam based on the location information of the terminal device, location information of the access point device, and reference beam direction information of an antenna of the access point device.

In this implementation, the access point device can determine the information about the first beam through calculation based on the location information that is of the terminal device and that is included in the first message, thereby improving feasibility of this solution.

In an optional implementation of this application, the reference beam direction information of the antenna of the access point device includes any one of direction information of a normal line of the antenna of the access point device, information about a direction perpendicular to the normal line of the antenna of the access point device, or information about a direction that has a preset included angle with the normal line of the antenna of the access point device.

In this implementation, the access point device may flexibly determine the required reference beam direction information in an actual situation based on different reference beam direction information of the antenna of the access point device, thereby improving flexibility of determining the information about the first beam, and improving flexibility of this solution.

In an optional implementation of this application, the first message includes the information about the first beam.

In this implementation, the access point device directly determines, without performing calculation, the information about the first beam based on the first message including the information about the first beam, thereby improving beam information determining efficiency.

In an optional implementation of this application, the access point device may further send a second message to the target terminal device, so that the target terminal device determines, based on the second message, information about a second beam pointing to the access point device.

In this implementation, the access point device sends the second message to the target terminal device, so that the target terminal device determines, based on the second message, the information about the second beam pointing to the access point device, so as to complete beam alignment between the target terminal device and the access point device, thereby improving feasibility of beam alignment in this solution.

In an optional implementation of this application, because the first message includes the location information of the terminal device and reference beam direction information of an antenna of the terminal device, the access point device may determine the information about the second beam based on the location information of the access point device, the location information of the terminal device, and the reference beam direction information of the antenna of the terminal device. Therefore, the second message includes the determined information about the second beam.

In this implementation, the access point device obtains, through calculation, the information about the second beam that is of the target terminal device and that points to the access point device, and carries the information about the second beam in the second message, so that the target terminal device directly determines the information about the second beam, thereby improving beam information determining efficiency.

In an optional implementation of this application, the reference beam direction information of the antenna of the terminal device includes any one of direction information of a normal line of the antenna of the terminal device, information about a direction perpendicular to the normal line of the antenna of the terminal device, or information about a direction that has a preset included angle with the normal line of the antenna of the terminal device.

In this implementation, the access point device may flexibly determine the required reference beam direction information in an actual situation based on different reference beam direction information of the antenna of the terminal device, thereby improving flexibility of determining the information about the second beam, and improving flexibility of this solution.

In an optional implementation of this application, the second message includes the location information of the access point device.

In this implementation, the access point device sends, to the target terminal device, the second message including the location information of the access point device, so that the target terminal device can determine the information about the second beam based on the location information, thereby improving feasibility of this solution.

According to a second aspect, this application provides a beam alignment method. The method may be performed by a terminal device, or may be performed by a chip configured in the terminal device. This is not limited in this application. The method includes: A terminal device receives a second message, then determines, based on the second message, information about a second beam pointing to a target access point device, and aligns an antenna beam of the terminal device with the target access point device based on the information about the second beam.

In this implementation, the information about the second beam pointing to the target access point device is determined based on the second message. Even if tracking is slow, the determined information about the beam pointing to the target access point device is also accurate, so that beam alignment accuracy is improved. Second, in a scenario of a plurality of access point devices, when the terminal device moves, the terminal device needs to be handed over to an access point device. Because the information about the second beam obtained by the terminal device points to the target access point device that provides a service, the terminal device performs a normal service, thereby improving beam alignment efficiency.

In an optional implementation of this application, the second message includes location information of the target access point device. Therefore, the terminal device may determine the information about the second beam based on the location information of the target access point device, location information of the terminal device, and reference beam direction information of an antenna of the terminal device.

In this implementation, the terminal device can determine the information about the second beam through calculation based on the location information that is of the access point device and that is included in the second message, thereby improving feasibility of this solution.

In an optional implementation of this application, the reference beam direction information of the antenna of the terminal device includes any one of direction information of a normal line of the antenna of the terminal device, information about a direction perpendicular to the normal line of the antenna of the terminal device, or information about a direction that has a preset included angle with the normal line of the antenna of the terminal device.

In this implementation, the terminal device may flexibly determine the information about the second beam in an actual situation based on different reference beam direction information of the antenna of the terminal device, thereby improving flexibility of this solution.

In an optional implementation of this application, the second message includes the information about the second beam.

In this implementation, the access point device directly determines, without performing calculation, the information about the second beam based on the second message including the information about the second beam, thereby improving beam information determining efficiency.

In an optional implementation of this application, the terminal device sends a first message to the target access point device, so that the target access point device determines, based on the first message, information about a first beam pointing to the terminal device.

In this implementation, the terminal device sends the first message to the target access point device, so that the target access point device determines, based on the first message, the information about the first beam pointing to the terminal device, to complete beam alignment between the target access point device and the terminal device, thereby improving feasibility of beam alignment in this solution.

In an optional implementation of this application, the second message includes the location information of the target access point device and reference beam direction information of an antenna of the target access point device. Therefore, the terminal device may determine the information about the first beam based on the location information of the terminal device, the location information of the target access point device, and the reference beam direction information of the antenna of the target access point device, and the first message sent to the target access point device includes the information about the first beam.

In this implementation, the terminal device obtains, through calculation, the information about the first beam that is of the target access point device and that points to the terminal device, and carries the information about the first beam in the first message, so that the target access point device directly determines the information about the first beam, thereby improving beam information determining efficiency.

In an optional implementation of this application, the reference beam direction information of the antenna of the target access point device includes any one of direction information of a normal line of the antenna of the target access point device, information about a direction perpendicular to the normal line of the antenna of the target access point device, or information about a direction that has a preset included angle with the normal line of the antenna of the target access point device.

In this implementation, the terminal device may flexibly determine the required reference beam direction information in an actual situation based on different reference beam direction information of the antenna of the access point device, thereby improving flexibility of determining the information about the first beam, and improving flexibility of this solution.

In an optional implementation of this application, the first message includes the location information of the terminal device.

In this implementation, the terminal device sends the second message including the location information of the access point device to the target access point device, so that the target access point device can determine the information about the first beam based on the location information, thereby improving feasibility of this solution.

According to a third aspect, this application provides an information transmission method. The method may be performed by a location service apparatus, or may be performed by a chip configured in the location service apparatus. The location service apparatus may be an access point device or may be an access point device. This is not limited in this application. The method includes: The location service apparatus sends a first message to a target access point device, so that the target access point device determines, based on the first message, information about a first beam pointing to a target terminal device. Then, the location service apparatus further sends a second message to the target terminal device, so that the target terminal device determines, based on the second message, information about a second beam pointing to the target access point device.

In this implementation, based on the first message and the second message, the location service apparatus can enable the target access point device to determine the information about the first beam pointing to the target terminal device, and enable the target terminal device to determine the information about the second beam pointing to the target access point device. Therefore, when tracking is slow, the beam information obtained by the target terminal device and the target access point device is also accurate, thereby improving beam alignment accuracy. In addition, in a scenario of a plurality of access point devices, when handover to an access point device is performed, there is no need to perform initial search again, and beam alignment between the target access point device and the terminal device can be completed based on the determined beam information. Therefore, a service of the target terminal device handed over between the plurality of access point devices is not affected, and beam alignment efficiency is improved.

In an optional implementation of this application, the first message includes location information of the target terminal device.

In this implementation, because the first message includes the location information of the target terminal device, the target access point device may obtain the location information of the target terminal device based on the first message, to determine the information about the first beam based on the location information of the target terminal device, location information of the target access point device, and reference beam direction information of an antenna of the target access point device, thereby improving feasibility of this solution.

In an optional implementation of this application, the location service apparatus may further obtain location information of the target terminal device, obtain location information of the target access point device and reference beam direction information of an antenna of the target access point device, determine the information about the first beam based on the location information of the target terminal device, the location information of the target access point device, and the reference beam direction information of the antenna of the target access point device, and send the first message including the information about the first beam to the target access point device.

In this implementation, the location service apparatus determines the information about the first beam based on the obtained location information of the target terminal device, the obtained location information of the target access point device, and the obtained reference beam direction information of the antenna of the target access point device, and carries the information about the first beam in the first message, so that the target access point device may directly determine the information about the first beam without performing calculation, thereby improving beam information determining efficiency.

In an optional implementation of this application, the reference beam direction information of the antenna of the target access point device includes any one of direction information of a normal line of the antenna of the target access point device, information about a direction perpendicular to the normal line of the antenna of the target access point device, or information about a direction that has a preset included angle with the normal line of the antenna of the target access point device.

In this implementation, because there are a plurality of options for the reference beam direction information of the antenna of the target access point device, the access point device may flexibly determine the required reference beam direction information in an actual situation, thereby improving flexibility of determining the information about the first beam, and improving flexibility of this solution.

In an optional implementation of this application, the second message includes location information of the target access point device.

In this implementation, because the second message includes the location information of the target access point device, the target terminal device may obtain the location information of the target access point device based on the second message, to determine the information about the second beam based on the location information of the target access point device, location information of the target terminal device, and reference beam direction information of an antenna of the target terminal device, thereby improving feasibility of this solution.

In an optional implementation of this application, the location service apparatus may further obtain location information of the target access point device, obtain location information of the target terminal device and reference beam direction information of an antenna of the target terminal device, determine the information about the second beam based on the location information of the target access point device, the location information of the target terminal device, and the reference beam direction information of the antenna of the target terminal device, and then send the second message including the information about the second beam to the target terminal device.

In this implementation, the location service apparatus determines the information about the second beam based on the obtained location information of the target access point device, the obtained location information of the target terminal device, and the obtained reference beam direction information of the antenna of the target terminal device, and carries the information about the second beam in the second message, so that the target terminal device may directly determine the information about the second beam without performing calculation, thereby improving beam information determining efficiency.

In an optional implementation of this application, the reference beam direction information of the antenna of the target terminal device includes any one of direction information of a normal line of the antenna of the target terminal device, information about a direction perpendicular to the normal line of the antenna of the target terminal device, or information about a direction that has a preset included angle with the normal line of the antenna of the target terminal device.

In this implementation, because there are a plurality of options for the reference beam direction information of the antenna of the target terminal device, the terminal device may flexibly determine the required reference beam direction information in an actual situation, thereby improving flexibility of determining the information about the second beam, and improving flexibility of this solution.

According to a fourth aspect, a communication apparatus is provided. The communication apparatus has some or all functions of the access point device according to any one of the first aspect or the possible implementations of the first aspect. For example, a function of the apparatus may have functions in some or all of embodiments of the access point device in this application, or may have a function of independently implementing any embodiment of this application. The function may be implemented by hardware, or may be implemented by hardware executing corresponding software. The hardware or the software includes one or more units or modules corresponding to the function.

In a possible design, a structure of the communication apparatus may include a processing module and a transceiver module. The processing module is configured to support the communication apparatus in performing a corresponding function in the foregoing methods. The transceiver module is configured to support communication between the communication apparatus and another device. The communication apparatus may further include a storage module. The storage module is configured to couple to the processing module and the transceiver module, and stores program instructions and data that are necessary for the communication apparatus.

In an implementation, the communication apparatus includes:
the transceiver module, configured to receive a first message; and
the processing module, configured to determine, based on the first message, information about a first beam pointing to a target terminal device, where
the processing module is further configured to align an antenna beam of the access point device with the target terminal device based on the information about the first beam.

For related content of this implementation, refer to the related content of the first aspect. Details are not described herein again.

In an example, the processing module may be a processor or a processing unit, the transceiver module may be a transceiver, a communication interface, or a communication unit, and the storage module may be a memory or a storage unit.

In another implementation, the communication apparatus may include:
a transceiver, configured to receive a first message; and
a processor, configured to determine, based on the first message, information about a first beam pointing to a target terminal device, where
the processor is further configured to align an antenna beam of the access point device with the target terminal device based on the information about the first beam.

For related content of this implementation, refer to the related content of the first aspect. Details are not described herein again.

In an implementation process, the processor may be configured to perform, for example but not limited to, baseband related processing, and the transceiver may be configured to perform, for example but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (for example but not limited to a graphics processing unit and a multimedia processor) may be integrated onto a same chip. Such a chip may be referred to as a system-on-a-chip (System-on-a-Chip). Whether the components are separately disposed on different chips or integrated and disposed on one or more chips usually depends on a requirement of a product design. Implementation forms of the foregoing components are not limited in embodiments of this application.

In another implementation, the communication apparatus is a chip or a chip system configured in the access point device. When the communication apparatus is the chip or the chip system configured in the access point device, a communication interface may be an input/output interface, an interface circuit, an output circuit, an input circuit, a pin, a related circuit, or the like. The processor may alternatively be embodied as a processing circuit or a logic circuit.

According to a fifth aspect, a communication apparatus is provided. The communication apparatus has some or all functions of the terminal device in any one of the second aspect or the possible implementations of the second aspect. For example, a function of the apparatus may have functions in some or all of embodiments of the terminal device in this application, or may have a function of independently implementing any embodiment of this application. The function may be implemented by hardware, or may be implemented by hardware executing corresponding software. The hardware or the software includes one or more units or modules corresponding to the function.

In a possible design, a structure of the communication apparatus may include a processing module and a transceiver module. The processing module is configured to support the communication apparatus in performing a corresponding function in the foregoing methods. The transceiver module is configured to support communication between the communication apparatus and another device. The communication apparatus may further include a storage module. The storage module is configured to couple to the processing module and the communication module, and stores program instructions and data that are necessary for the communication apparatus.

In an implementation, the communication apparatus includes:
the transceiver module, configured to receive a second message; and
the processing module, configured to determine, based on the second message, information about a second beam pointing to a target access point device, where
the processing module is further configured to align an antenna beam of the terminal device with the target access point device based on the information about the second beam.

For related content of this implementation, refer to the related content of the second aspect. Details are not described herein again.

In an example, the processing module may be a processor or a processing unit, the transceiver module may be a transceiver, a communication interface, or a communication unit, and the storage module may be a memory or a storage unit.

In another implementation, the communication apparatus may include:
a transceiver, configured to receive a second message; and
a processor, configured to determine, based on the second message, information about a second beam pointing to a target access point device, where
the processor is further configured to align an antenna beam of the terminal device with the target access point device based on the information about the second beam. For related content of this implementation, refer to the related content of the second aspect. Details are not described herein again.

In an implementation process, the processor may be configured to perform, for example but not limited to, baseband related processing, and the transceiver may be configured to perform, for example but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (for example but not limited to a graphics processing unit and a multimedia processor) may be integrated onto a same chip. Such a chip may be referred to as a system-on-a-chip (System-on-a-Chip). Whether the components are separately disposed on different chips or integrated and disposed on one or more chips usually depends on a requirement of a product design. Implementation forms of the foregoing components are not limited in embodiments of this application.

In another implementation, the communication apparatus is a chip or a chip system configured in the terminal device. When the communication apparatus is the chip or the chip system configured in the terminal device, a communication interface may be an input/output interface, an interface circuit, an output circuit, an input circuit, a pin, a related circuit, or the like. The processor may alternatively be embodied as a processing circuit or a logic circuit.

According to a sixth aspect, a communication apparatus is provided. The communication apparatus has some or all functions of the location service apparatus according to any one of the third aspect or the possible implementations of the third aspect. For example, a function of the apparatus may have functions in some or all of embodiments of the location service apparatus in this application, or may have a function of independently implementing any embodiment of this application. The function may be implemented by hardware, or may be implemented by hardware executing corresponding software. The hardware or the software includes one or more units or modules corresponding to the function.

In a possible design, a structure of the communication apparatus may include a processing module and a transceiver module. The processing module is configured to support the communication apparatus in performing a corresponding function in the foregoing methods. The transceiver module is configured to support communication between the communication apparatus and another device. The communication apparatus may further include a storage module. The storage module is configured to couple to the processing module and the communication module, and stores program instructions and data that are necessary for the communication apparatus.

In an implementation, the communication apparatus includes:
the transceiver module, configured to send a first message to a target access point device, so that the target access point device determines, based on the first message, information about a first beam pointing to a target terminal device, where
the transceiver module is further configured to send a second message to the target terminal device, so that the target terminal device determines, based on the second message, information about a second beam pointing to the target access point device.

For related content of this implementation, refer to the related content of the third aspect. Details are not described herein again.

In an example, the processing module may be a processor or a processing unit, the transceiver module may be a transceiver, a communication interface, or a communication unit, and the storage module may be a memory or a storage unit.

In another implementation, the communication apparatus may include:
a transceiver, configured to send a first message to a target access point device, so that the target access point device determines, based on the first message, information about a first beam pointing to a target terminal device, where
the transceiver is further configured to send a second message to the target terminal device, so that the target terminal device determines, based on the second message, information about a second beam pointing to the target access point device.

For related content of this implementation, refer to the related content of the third aspect. Details are not described herein again.

In an implementation process, the processor may be configured to perform, for example but not limited to, baseband related processing, and the transceiver may be configured to perform, for example but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (for example but not limited to a graphics processing unit and a multimedia processor) may be integrated onto a same chip. Such a chip may be referred to as a system-on-a-chip (System-on-a-Chip). Whether the components are separately disposed on different chips or integrated and disposed on one or more chips usually depends on a requirement of a product design. Implementation forms of the foregoing components are not limited in embodiments of this application.

In another implementation, the communication apparatus is a chip or a chip system configured in the location service apparatus. When the communication apparatus is the chip or the chip system configured in the location service apparatus, a communication interface may be an input/output interface, an interface circuit, an output circuit, an input circuit, a pin, a related circuit, or the like. The processor may alternatively be embodied as a processing circuit or a logic circuit.

According to a seventh aspect, a processor is provided. The processor includes an input circuit, an output circuit, and a processing circuit. The processing circuit is configured to: receive a signal through the input circuit, and transmit a signal through the output circuit, so that the processor performs the method in any one of the possible implementations of the first aspect to the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example but not limited to, a receiver, a signal output by the output circuit may be output to, for example but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a communication apparatus is provided, and includes a communication interface and a processor. The communication interface is coupled to the processor. The communication interface is configured to input and/or output information. The information includes at least one of instructions and data. The processor is configured to execute a computer program, so that the communication apparatus performs the method in any one of the possible implementations of the first aspect to the third aspect.

Optionally, there are one or more processors, and there are one or more memories.

According to a ninth aspect, a communication apparatus is provided, and includes a processor and a memory. The processor is configured to: read instructions stored in the memory, receive a signal via a receiver, and transmit a signal via a transmitter, so that the apparatus performs the method in any one of the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The communication apparatuses in the eighth aspect and the ninth aspect may be chips. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, may be located outside the processor, and may exist independently.

According to a tenth aspect, a computer program product is provided. The computer program product includes a computer program (which may also be referred to as code or instructions). When the computer program is run, a computer is enabled to perform the method in any one of the possible implementations of the first aspect to the third aspect.

According to an eleventh aspect, a computer-readable storage medium is provided. The computer-readable storage medium stores a computer program (also referred to as code or instructions). When the computer program is run on a computer, the computer is enabled to perform the method in any one of the possible implementations of the first aspect to the third aspect.

According to a twelfth aspect, a communication system is provided, and includes the foregoing access point device, terminal device, and location service apparatus.

According to a thirteenth aspect, this application provides a chip system. The chip system includes a processor and an interface. The interface is configured to obtain a program or instructions. The processor is configured to invoke the program or the instructions to implement or support an access point device in implementing a function in the first aspect, for example, determining or processing at least one of data and information in the foregoing methods.

In a possible design, the chip system further includes a memory. The memory is configured to store program instructions and data that are necessary for the access point device. The chip system may include a chip, or may include a chip and another discrete component.

According to a fourteenth aspect, this application provides a chip system. The chip system includes a processor and an interface. The interface is configured to obtain a program or instructions. The processor is configured to invoke the program or the instructions to implement or support a terminal device in implementing a function in the second aspect, for example, determining or processing at least one of data and information in the foregoing methods.

In a possible design, the chip system further includes a memory. The memory is configured to store program instructions and data that are necessary for the terminal device. The chip system may include a chip, or may include a chip and another discrete component.

According to a fifteenth aspect, this application provides a chip system. The chip system includes a processor and an interface. The interface is configured to obtain a program or instructions. The processor is configured to invoke the program or the instructions to implement or support a location service apparatus in implementing a function in the third aspect, for example, determining or processing at least one of data and information in the foregoing methods.

In a possible design, the chip system further includes a memory. The memory is configured to store program instructions and data that are necessary for the location service apparatus. The chip system may include a chip, or may include a chip and another discrete component.

It should be noted that beneficial effects brought by the implementations of the fourth aspect to the fifteenth aspect of this application and descriptions of the implementations of the aspects may be understood with reference to the implementations of the first aspect to the third aspect. Therefore, details are not described again.

### BRIEF DESCRIPTION OF DRAWINGS

FIG. 1 is a schematic diagram of an embodiment of beam alignment between a transmit antenna and a receive antenna according to an embodiment of this application;
FIG. 2 is a schematic diagram of an embodiment applied to a millimeter wave communication scenario of a home network according to an embodiment of this application;
FIG. 3 is a schematic diagram of a system architecture of a communication system according to an embodiment of this application;
FIG. 4 is a schematic diagram of an embodiment of a beam alignment method according to an embodiment of this application;
FIG. 5 is a schematic diagram of an embodiment in which an antenna beam of an access point device is aligned with a terminal device according to an embodiment of this application;
FIG. 6 is a schematic diagram of an embodiment in which an antenna beam of a terminal device is aligned with an access point device according to an embodiment of this application;
FIG. 7 is a schematic diagram of another embodiment of a beam alignment method according to an embodiment of this application;
FIG. 8 is a schematic diagram of another embodiment of a beam alignment method according to an embodiment of this application;
FIG. 9 is a schematic diagram of another embodiment of a beam alignment method according to an embodiment of this application;
FIG. 10 is a schematic diagram of another embodiment of a beam alignment method according to an embodiment of this application;
FIG. 11A and FIG. 11B are a schematic diagram of another embodiment of a beam alignment method according to an embodiment of this application;
FIG. 12 is a schematic diagram of another embodiment of a beam alignment method according to an embodiment of this application;
FIG. 13 is a schematic diagram of another embodiment of a beam alignment method according to an embodiment of this application;
FIG. 14 is a schematic diagram of another embodiment of a beam alignment method according to an embodiment of this application;
FIG. 15A and FIG. 15B are a schematic diagram of another embodiment of a beam alignment method according to an embodiment of this application;
FIG. 16 is a schematic diagram of another embodiment of a beam alignment method according to an embodiment of this application;
FIG. 17A and FIG. 17B are a schematic diagram of another embodiment of a beam alignment method according to an embodiment of this application;
FIG. 18A and FIG. 18B are a schematic diagram of another embodiment of a beam alignment method according to an embodiment of this application;
FIG. 19 is a schematic diagram of an embodiment of a communication apparatus according to an embodiment of this application;
FIG. 20 is a schematic structural diagram of a terminal device according to an embodiment of this application; and
FIG. 21 is a schematic structural diagram of an access point device according to an embodiment of this application.

### DESCRIPTION OF EMBODIMENTS

The following describes technical solutions in this application with reference to accompanying drawings.

The technical solutions in embodiments of this application may be applied to various communication systems, for example, a millimeter wave Wi-Fi system or a long term evolution (long term evolution, LTE) system. With continuous development of a communication system, technical solutions in this application may be applied to a 5th generation (5th generation, 5G) system or a new radio (new radio, NR) system, or may be applied to a future network, such as a 6G system or even a future system, or may be applied to a device to device (device to device, D2D) system, a machine to machine (machine to machine, M2M) system, and the like.

It should be understood that an access point device in the communication system may be any device having a wireless transceiver function or a chip that can be disposed in the device. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, a Home evolved NodeB, or a Home NodeB, HNB), a baseband unit (BaseBand Unit, BBU), or an AP, a wireless relay node, a wireless backhaul node, a transmission point (transmission point, TP), a transmission reception point (TRP), or the like in a Wi-Fi system; may be a device used in a 5G, 6G, or even a future system, for example, a gNB or a transmission point (TRP or TP) in an NR system, or one or a group of antenna panels (including a plurality of antenna panels) of a base station in a 5G system; or may be a network node that forms a gNB or a transmission point, for example, a baseband unit (BBU), a distributed unit (distributed unit, DU), a picocell (Picocell), a femtocell (Femtocell), or a roadside unit (roadside unit, RSU) in vehicle to everything (vehicle to everything, V2X) or an intelligent driving scenario.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the access point device may be a CU node, a DU node, or a device including a CU node and a DU node. In addition, the CU may be classified into an access point device in an access network RAN, or the CU may be classified into an access point device in a core network CN. This is not limited herein.

In embodiments disclosed in this application, an apparatus configured to implement a function of an access point device may be an access point device, or may be an apparatus, for example, a chip system, that can support the access point device in implementing the function, where the apparatus may be mounted in the access point device.

In embodiments disclosed in this application, an apparatus configured to implement a function of a location service apparatus may be an access point device, may be mounted in the access point device, or may be an apparatus that can support the location service apparatus in implementing the function. This is not specifically limited herein.

It should be further understood that, if the technical solution is applied to the millimeter wave Wi-Fi system, a STA in the system is a terminal device connected to millimeter wave Wi-Fi, and the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. A terminal device in embodiments of this application may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in a transportation safety (transportation safety), a wireless terminal in a smart city (smart city), a wireless terminal in a smart home (smart home), a wireless terminal in the foregoing vehicle to everything V2X, an RSU of a wireless terminal type, or the like. An application scenario is not limited in embodiments of this application.

In addition, to facilitate understanding of embodiments of this application, the following several descriptions are provided.

First, in this application, for ease of description, when numbering is used, consecutive numbering may start from 0. For example, symbol 0 in a slot may be an initial symbol in the slot. Certainly, this does not constitute any limitation during specific implementation. For example, consecutive numbering may alternatively start from 1. For example, symbol 1 in a slot may be an initial symbol in the slot. Because start values of numbers are different, numbers corresponding to a same symbol in slots are accordingly different.

It should be understood that the foregoing descriptions are all provided to help describe the technical solutions provided in embodiments of this application, but are not intended to limit the scope of this application.

Second, in embodiments shown below, for a technical feature, "first", "second", "third", and the like are used to distinguish technical features in the technical feature, and there is no sequence or order between the technical features described by "first", "second", and "third".

Third, "at least one" indicates one or more, and "a plurality of" indicates two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, and c may represent: a, b, c, a and b, a and c, b and c, or a, b, and c, where a, b, and c each may be singular or plural.

Fourth, in embodiments shown below, some scenarios are described by using an NR network scenario in a wireless communication network as an example. It should be noted that the solutions disclosed in embodiments of this application may be further applied to another wireless communication network, and a corresponding name may also be replaced with a name of a corresponding function in the another wireless communication network.

Fifth, embodiments disclosed in this application present aspects, embodiments, or features of this application around a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Sixth, in embodiments disclosed in this application, "of (of)", "relevant (relevant)", and "corresponding (corresponding)" may be interchangeably used sometimes. It should be noted that, when a difference between the two is not emphasized, meanings of the two expressions are consistent.

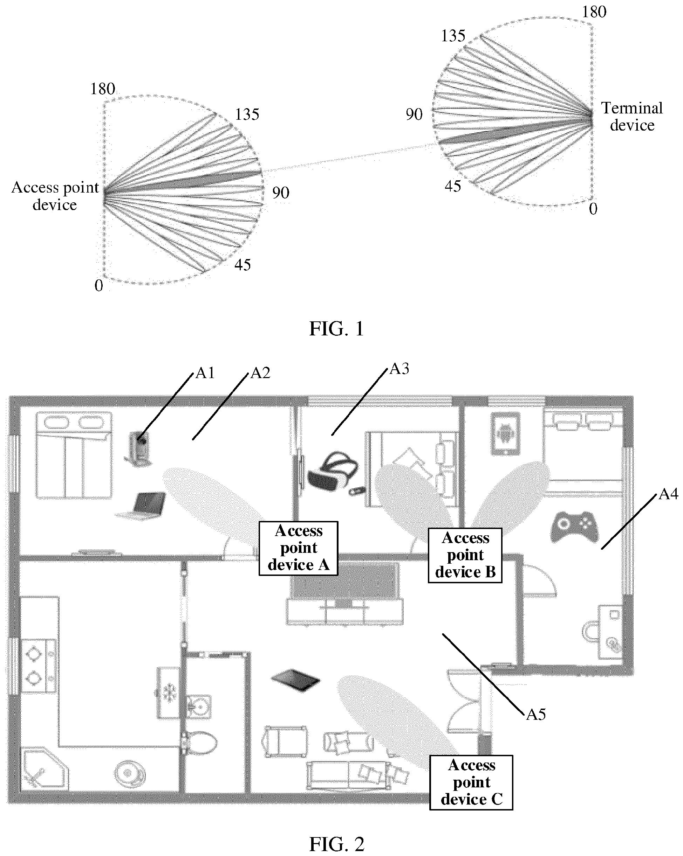

Due to a large path loss in millimeter wave communication, a narrow-beam antenna is usually used to improve a directional gain, to compensate for a loss on a propagation path. FIG. 1 is a schematic diagram of an embodiment of beam alignment between a transmit antenna and a receive antenna according to an embodiment of this application. As shown in FIG. 1, when a narrow-beam antenna that is of a terminal device and that points to an access point device is aligned with a narrow-beam antenna that is of the access point device and that points to the terminal device, a system obtains a highest antenna gain, to achieve optimal transmission performance. However, because the terminal device moves, alignment of antenna beams is to be deviated. Consequently, signal transmission quality is greatly reduced, and link transmission performance is affected. To resolve this problem, beam scanning usually needs to be periodically performed when service data is transmitted, and optimal beam selection and feedback are performed on a receiver side, so as to track a transmit beam. After an optimal transmit beam is obtained through adjustment, receive beams need to be traversed to obtain an optimal receive beam, so that an entire receive and transmit link has optimal performance. In addition, when an embodiment is applied to a millimeter wave communication scenario of a home network, refer to FIG. 2. FIG. 2 is a schematic diagram of an embodiment applied to a millimeter wave communication scenario of the home network according to an embodiment of this application. As shown in FIG. 2, A1 indicates a terminal device, A2 to A5 indicate rooms, an access point device A may establish a connection to a terminal device that is in the room A2, an access point device B may establish a connection to terminal devices that are in the room A3 and the room A4, and an access point device C may establish a connection to a terminal device that is in the room A5. Due to a characteristic that a millimeter wave cannot penetrate a wall, when a terminal device moves between rooms, for example, when the terminal device moves from the current room A2 to the room A5, a link between the access point device A in the room A2 and the terminal device is interrupted, and a connection between the access point device C in the room A5 and the terminal device is not established. In this case, a relatively long registration process and a new beam alignment process are performed between the access point device C and the terminal device. Consequently, service provision for the terminal device is affected, and quality of service is reduced.

Currently, in millimeter wave Wi-Fi beam alignment, an AP device periodically sends a downlink sweep frame. Different slots of the sweep frame are formed by concatenating signal segments to which different beams point, so that omnidirectional beam scanning can be performed. A STA is connected to a terminal device in millimeter wave Wi-Fi. The STA obtains sent signals in different directions by receiving signal frames that are in different time periods, and then feeds back received signal-to-noise ratios in the different directions to the AP device. In this way, a rough downlink transmission direction is obtained. After rough alignment is completed, narrower beam scanning is performed on the roughly aligned direction, so as to determine an accurate downlink sending direction. Finally, the STA searches for an uplink sending direction through a scanning mechanism that is the same as that in a downlink, to complete alignment of the receive and transmit beams. However, a large quantity of slots are needed for scanning and alignment during continuous tracking, and this reduces an ultimate bandwidth. When tracking is slow, a problem of inaccurate beam alignment occurs. In addition, in a scenario of a plurality of access point devices, an access point device to which handover is to be performed needs to perform initial search again, and this causes service interruption. Consequently, beam alignment accuracy is reduced, and beam alignment efficiency is reduced.

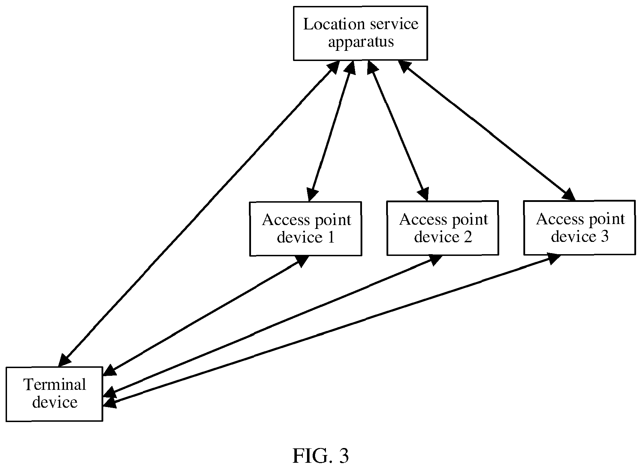

To resolve the foregoing problems, embodiments of this application provide a beam alignment method and an information transmission method, to improve beam alignment accuracy and beam alignment efficiency. Second, to better understand a beam alignment method, an information transmission method, and a related device disclosed in embodiments of this application, a system architecture of a communication system used in embodiments of this application is first described. This application may be applied to a communication system including one terminal device, one location service apparatus, and a plurality of access point devices, or may be applied to a communication system including a plurality of terminal devices, a plurality of location service apparatuses, and a plurality of access point devices. On this basis, FIG. 3 is a schematic diagram of a system architecture of a communication system according to an embodiment of this application. As shown in FIG. 3, one terminal device, one location service apparatus, and a plurality of access point devices form a communication system. In the communication system, the location service apparatus and the terminal device may send a first message to any one of an access point device 1 to an access point device 3, and the location service apparatus and the access point device 1 to the access point device 3 may send second messages to the terminal device. In addition, one terminal device and a plurality of access point devices may also form a communication system. Therefore, in the communication system, the terminal device may send a first message to any one of the access point device 1 to the access point device 3, and the access point device 1 to the access point device 3 may send second messages to the terminal device.

On this basis, because the first message received by the access point device may be sent by the terminal device, or may be sent by the location service apparatus, and the second message received by the terminal device may be sent by the access point device, or may be sent by the location service apparatus, the following separately describes cases in which different devices and apparatuses send the first message and the second message, to provide detailed descriptions of the beam alignment method used in embodiments of this application.

1. A target access point device receives a first message sent by a location service apparatus, and a target terminal device receives a second message sent by the location service apparatus.

Specifically, in this embodiment, the first message may include location information of the target terminal device, or the first message may further include information about a first beam. In addition, the second message may include location information of the target access point device, or the second message may further include information about a second beam.

Therefore, this embodiment further describes a case in which the first message and the second message include different information.
(1) The first message includes the information about the first beam, and the second message includes the information about the second beam.

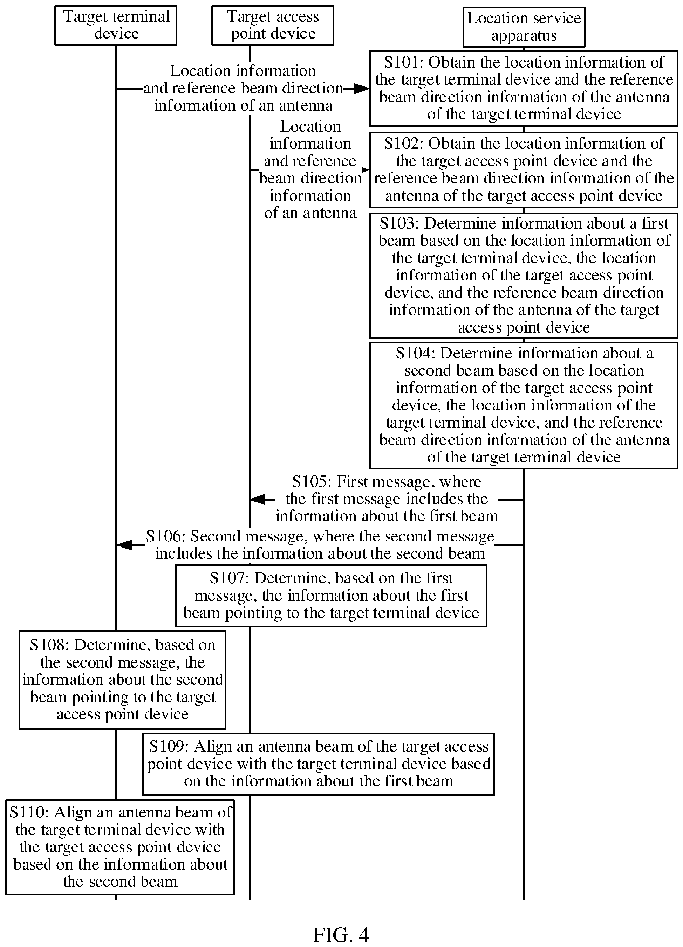

FIG. 4 is a schematic diagram of an embodiment of a beam alignment method according to an embodiment of this application. As shown in FIG. 4, the beam alignment method includes the following steps.

S101: The location service apparatus obtains the location information of the target terminal device and reference beam direction information of an antenna of the target terminal device.

In this embodiment, in a scenario in which there are a plurality of access point devices in a home network, when the target terminal device needs to connect to an access point device, the target terminal device may send registration information in a low frequency band (for example, 2.4 GHz) or a wide beam broadcast manner, and send the location information of the target terminal device to the location service apparatus in the wide beam broadcast manner. In this way, the location service apparatus may obtain the location information of the target terminal device. In addition, the location service apparatus may further determine the location information of the target terminal device through millimeter wave positioning, or determine the location information of the target terminal device in an auxiliary manner, where the auxiliary manner includes but is not limited to an infrared manner, a wireless local area network (Wireless-Fidelity, Wi-Fi) manner, and a sound manner.

It may be understood that the location service apparatus may further receive, in a similar manner, the reference beam direction information that is of the antenna of the target terminal device and that is sent by the target terminal device in the wide beam broadcast manner, or determine the reference beam direction information of the antenna of the target terminal device through millimeter wave positioning, or determine the reference beam direction information of the antenna in the auxiliary manner. Specifically, the reference beam direction information of the antenna of the target terminal device includes any one of direction information of a normal line of the antenna of the target terminal device, information about a direction perpendicular to the normal line of the antenna of the target terminal device, or information about a direction that has a preset included angle with the normal line of the antenna of the target terminal device.

In this embodiment, a specific manner in which the location service apparatus obtains the location information of the target terminal device and the reference beam direction information of the antenna of the target terminal device is not limited.

S102: The location service apparatus obtains the location information of the target access point device and reference beam direction information of an antenna of the target access point device.

In this embodiment, in a scenario in which there are a plurality of access point devices in a home network, because a location service is configured in a manual recording manner when a millimeter wave communication network is deployed, the location service apparatus may store location information of each access point device, and may further store reference beam direction information of an antenna of each access point device.

Further, the location service apparatus needs to obtain real-time information of each access point device, where the real-time information includes traffic information of each access point device or signal strength information of each access point device, and then determines, from the plurality of access point devices based on the location information that is of the target terminal device and that is obtained in step S101 and the real-time information, the target access point device that provides a management service for the target terminal device, so as to obtain the location information of the target access point device and the reference beam direction information of the antenna of the target access point device from related information about the plurality of access point devices that is manually recorded.

Specifically, the reference beam direction information of the antenna of the target access point device includes any one of direction information of a normal line of the antenna of the target access point device, information about a direction perpendicular to the normal line of the antenna of the target access point device, or information about a direction that has a preset included angle with the normal line of the antenna of the target access point device.

It may be understood that in the scenario in which there are the plurality of access point devices in the home network, in this embodiment of this application, the location service apparatus converts the location information of the target terminal device and the location information of the target access point device into a home network coordinate system, so that the target terminal device and the target access point device are in a same plane coordinate system, to facilitate calculation. This should not be understood as a limitation of this application.

S103: The location service apparatus determines the information about the first beam based on the location information of the target terminal device, the location information of the target access point device, and the reference beam direction information of the antenna of the target access point device.

In this embodiment, after obtaining the related information of the target terminal device and the target access point device in step S101 and step S102, the location service apparatus may determine the information about the first beam based on the location information of the target terminal device, the location information of the target access point device, and the reference beam direction information of the antenna of the target access point device. Specifically, the information about the first beam includes direction information and angle information that are of an antenna beam, of the target access point device, pointing to the target terminal device.

S104: The location service apparatus determines the information about the second beam based on the location information of the target access point device, the location information of the target terminal device, and the reference beam direction information of the antenna of the target terminal device.

In this embodiment, after obtaining the related information of the target terminal device and the target access point device in step S101 and step S102, the location service apparatus may determine the information about the second beam based on the location information of the target access point device, the location information of the target terminal device, and the reference beam direction information of the antenna of the target terminal device. Specifically, the information about the second beam includes direction information and angle information that are of an antenna beam, of the target terminal device, pointing to the target access point device.

It may be understood that, in this embodiment, there is no necessary sequence between step S103 and step S 104. Step S 103 may be performed first, or step S 104 may be performed first, or step S 103 and step S 104 may be simultaneously performed. This is not specifically limited herein.

S 105: The location service apparatus sends the first message to the target access point device.

In this embodiment, the location service apparatus sends the first message to the target access point device, where the first message includes the information that is about the first beam and that is determined in step S103.

S106: The location service apparatus sends the second message to the target terminal device.

In this embodiment, the location service apparatus sends the second message to the target terminal device, where the second message includes the information that is about the second beam and that is determined in step S104.

It may be understood that, in this embodiment, there is no necessary sequence between step S105 and step S 106. Step S105 may be performed first, or step S106 may be performed first, or step S105 and step S 106 may be simultaneously performed. This is not specifically limited herein.

S107: The target access point device determines, based on the first message, the information about the first beam pointing to the target terminal device.

In this embodiment, the target access point device directly determines, based on the information that is about the first beam and that is included in the first message, the information about the first beam pointing to the target terminal device.

S108: The target terminal device determines, based on the second message, the information about the second beam pointing to the target access point device.

In this embodiment, the target terminal device directly determines, based on the information that is about the second beam and that is included in the second message, the information about the second beam pointing to the target access point device.

It may be understood that, in this embodiment, there is no necessary sequence between step S107 and step S108. Step S107 may be performed first, or step S108 may be performed first, or step S107 and step S108 may be simultaneously performed. This is not specifically limited herein.

S109: The target access point device aligns the antenna beam of the target access point device with the target terminal device based on the information about the first beam.

In this embodiment, the target access point device aligns the antenna beam of the target access point device with the target terminal device based on the direction information and the angle information that are included in the information about the first beam and that are of the antenna beam, of the target access point device, pointing to the target terminal device.

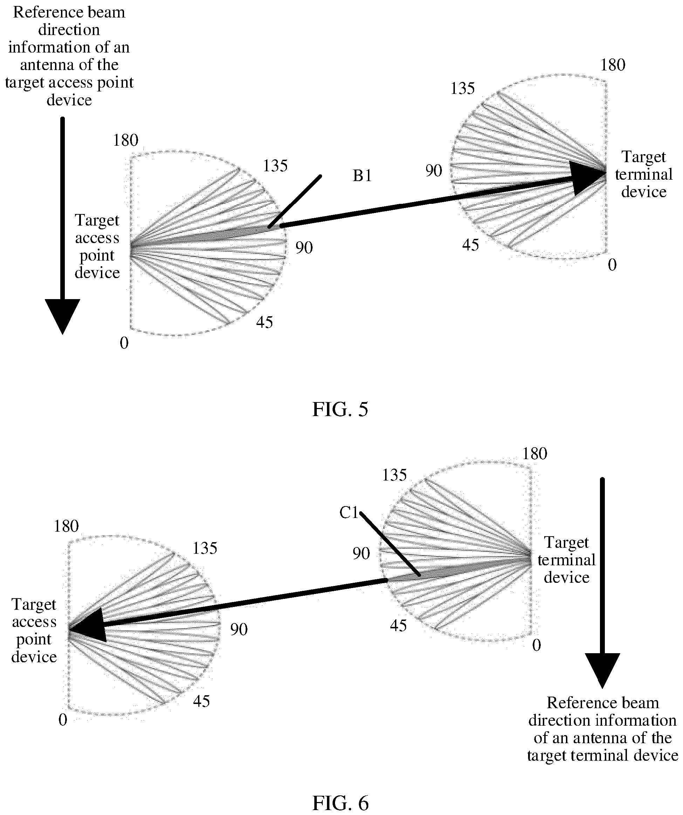

For ease of understanding, in an example, the reference beam direction information of the antenna of the target access point device is the direction information of the normal line of the antenna of the target access point device, the direction information and the angle information that are included in the information about the first beam indicate that an antenna beam with an angle of 100° counterclockwise to the direction of the normal line of the antenna of the target access point device is aligned with the target terminal device. FIG. 5 is a schematic diagram of an embodiment in which an antenna beam of an access point device is aligned with a terminal device according to an embodiment of this application. As shown in FIG. 5, B1 indicates an antenna beam of the target access point device, and the antenna beam B 1 is the antenna beam that is determined based on the information about the first beam and that is with an angle of 100° counterclockwise to the direction of the normal line of the antenna of the target access point device. Therefore, the target access point device aligns the antenna beam B1 with the target terminal device.

S 110: The target terminal device aligns the antenna beam of the target terminal device with the target access point device based on the information about the second beam.

In this embodiment, the target access point device aligns the antenna beam of the target access point device with the target terminal device based on the direction information and the angle information that are included in the information about the first beam and that are of the antenna beam, of the target access point device, pointing to the target terminal device.

For ease of understanding, in an example, the reference beam direction information of the antenna of the target terminal device is the direction information of the normal line of the antenna of the target terminal device, the direction information and the angle information that are included in the information about the second beam indicate that an antenna beam with an angle of 100°counterclockwise to the direction of the normal line of the antenna of the target terminal device is aligned with the target access point device. FIG. 6 is a schematic diagram of an embodiment in which an antenna beam of a terminal device is aligned with an access point device according to an embodiment of this application. As shown in FIG. 6, C1 indicates an antenna beam of the target terminal device, and the antenna beam C1 is the antenna beam that is determined based on the information about the second beam and that is with an angle of 100°counterclockwise to the direction of the normal line of the antenna of the target terminal device. Therefore, the target terminal device aligns the antenna beam C1 with the target access point device.

It may be understood that, in this embodiment, there is no necessary sequence between step S109 and step S1010. Step S109 may be performed first, or step S1010 may be performed first, or step S109 and step S1010 may be simultaneously performed. This is not specifically limited herein.

(2) The first message includes the location information of the target terminal device, and the second message includes the location information of the target access point device.

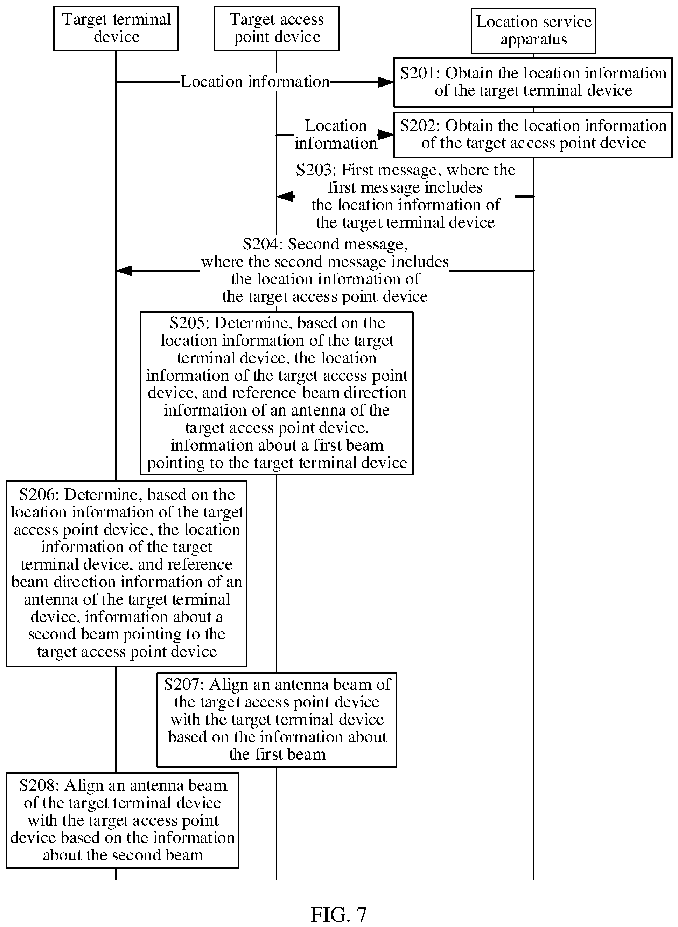

FIG. 7 is a schematic diagram of another embodiment of a beam alignment method according to an embodiment of this application. As shown in FIG. 7, the beam alignment method includes the following steps.

S201: The location service apparatus obtains the location information of the target terminal device.

In this embodiment, a manner in which the location service apparatus obtains the location information of the target terminal device is similar to that in step S 101, and details are not described herein again.

S202: The location service apparatus obtains the location information of the target access point device.

In this embodiment, a manner in which the location service apparatus obtains the location information of the target access point device is similar to that in step S102, and details are not described herein again.

S203: The location service apparatus sends the first message to the target access point device.

In this embodiment, the location service apparatus sends the first message to the target access point device, where the first message includes the location information that is of the target terminal device and that is obtained in step S201.

S204: The location service apparatus sends the second message to the target terminal device.

In this embodiment, the location service apparatus sends the second message to the target terminal device, where the second message includes the location information that is of the target access point device and that is obtained in step S202.

It may be understood that, in this embodiment, there is no necessary sequence between step S203 and step S204. Step S203 may be performed first, or step S204 may be performed first, or step S203 and step S204 may be simultaneously performed. This is not specifically limited herein.

S205: The target access point device determines, based on the location information of the target terminal device, the location information of the target access point device, and reference beam direction information of an antenna of the target access point device, information about a first beam pointing to the target terminal device.

In this embodiment, because the first message includes the location information of the target terminal device, the target access point device may obtain the location information of the target terminal device based on the first message, and determine, based on the location information of the target terminal device, the location information of the target access point device, and the reference beam direction information of the antenna of the target access point device, the information about the first beam pointing to the target terminal device. Specifically, the information about the first beam includes direction information and angle information that are of an antenna beam, of the target access point device, pointing to the target terminal device.

S206: The target terminal device determines, based on the location information of the target access point device, the location information of the target terminal device, and reference beam direction information of an antenna of the target terminal device, information about a second beam pointing to the target access point device.

In this embodiment, because the second message includes the location information of the target access point device, the target terminal device may obtain the location information of the target access point device based on the second message, and determine, based on the location information of the target access point device, the location information of the target terminal device, and the reference beam direction information of the antenna of the target terminal device, the information about the second beam pointing to the target access point device. Specifically, the information about the second beam includes direction information and angle information that are of an antenna beam, of the target terminal device, pointing to the target access point device.

It may be understood that, in this embodiment, there is no necessary sequence between step S205 and step S206. Step S205 may be performed first, or step S206 may be performed first, or step S205 and step S206 may be simultaneously performed. This is not specifically limited herein.

S207: The target access point device aligns the antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

S208: The target terminal device aligns the antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

It may be understood that in this embodiment, there is no necessary sequence between step S207 and step S208. Step S207 may be performed first, or step S208 may be performed first, or step S207 and step S208 may be simultaneously performed. This is not specifically limited herein.

(3) The first message includes the location information of the target terminal device, and the second message includes the information about the second beam.

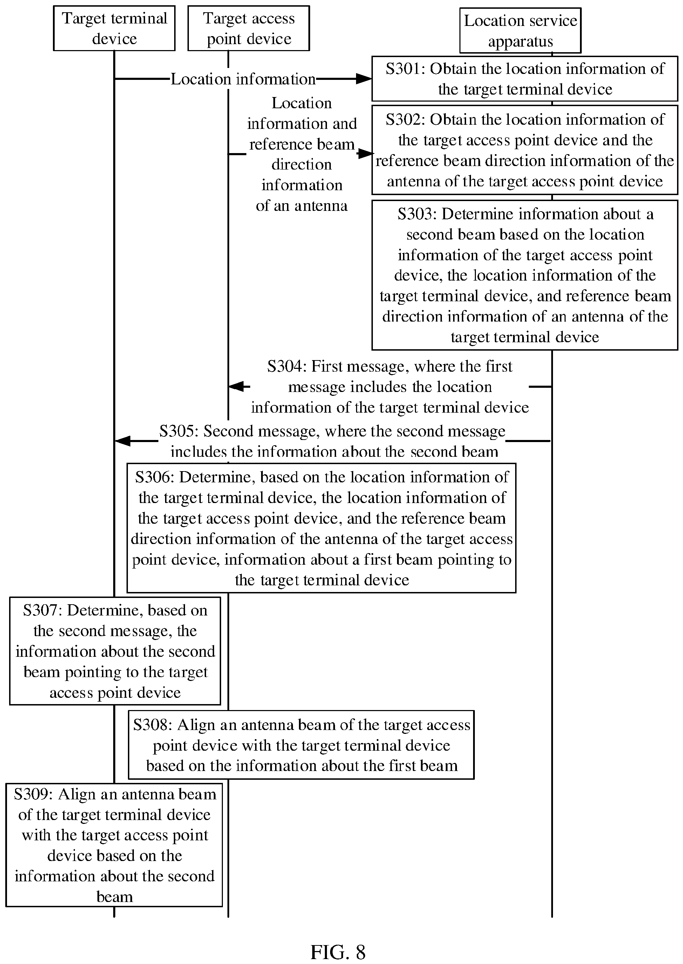

FIG. 8 is a schematic diagram of another embodiment of a beam alignment method according to an embodiment of this application. As shown in FIG. 8, the beam alignment method includes the following steps.

S301: The location service apparatus obtains the location information of the target terminal device.

In this embodiment, a manner in which the location service apparatus obtains the location information of the target terminal device is similar to that in step S101, and details are not described herein again.

S302: The location service apparatus obtains the location information of the target access point device and reference beam direction information of an antenna of the target access point device.

In this embodiment, a manner in which the location service apparatus obtains the location information of the target access point device and the reference beam direction information of the antenna of the target access point device is similar to that in step S102, and details are not described herein again.

S303: The location service apparatus determines the information about the second beam based on the location information of the target access point device, the location information of the target terminal device, and reference beam direction information of an antenna of the target terminal device.

In this embodiment, a manner in which the location service apparatus determines the information about the second beam based on the location information of the target access point device, the location information of the target terminal device, and the reference beam direction information of the antenna of the target terminal device is similar to that in step S104, and details are not described herein again.

S304: The location service apparatus sends the first message to the target access point device.

In this embodiment, the location service apparatus sends the first message to the target access point device, where the first message includes the location information that is of the target terminal device and that is obtained in step S301.

S305: The location service apparatus sends the second message to the target terminal device.

In this embodiment, the location service apparatus sends the second message to the target terminal device, where the second message includes the information that is about the second beam and that is determined in step S303.

It may be understood that in this embodiment, there is no necessary sequence between step S304 and step S305. Step S304 may be performed first, or step S305 may be performed first, or step S304 and step S305 may be simultaneously performed. This is not specifically limited herein.

S306: The target access point device determines, based on the location information of the target terminal device, the location information of the target access point device, and the reference beam direction information of the antenna of the target access point device, information about a first beam pointing to the target terminal device.

In this embodiment, a manner in which the target access point device determines, based on the location information of the target terminal device, the location information of the target access point device, and the reference beam direction information of the antenna of the target access point device, the information about the first beam pointing to the target terminal device is similar to that in step S205, and details are not described herein again.

S307: The target terminal device determines, based on the second message, the information about the second beam pointing to the target access point device.

In this embodiment, a manner in which the target terminal device determines, based on the second message, the information about the second beam pointing to the target access point device is similar to that in step S108, and details are not described herein again.

It may be understood that in this embodiment, there is no necessary sequence between step S306 and step S307. Step S306 may be performed first, or step S307 may be performed first, or step S306 and step S307 may be simultaneously performed. This is not specifically limited herein.

S308: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

S309: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

It may be understood that, in this embodiment, there is no necessary sequence between step S308 and step S309. Step S308 may be performed first, or step S309 may be performed first, or step S308 and step S309 may be simultaneously performed. This is not specifically limited herein.

(4) The first message includes the information about the first beam, and the second message includes the location information of the target access point device.

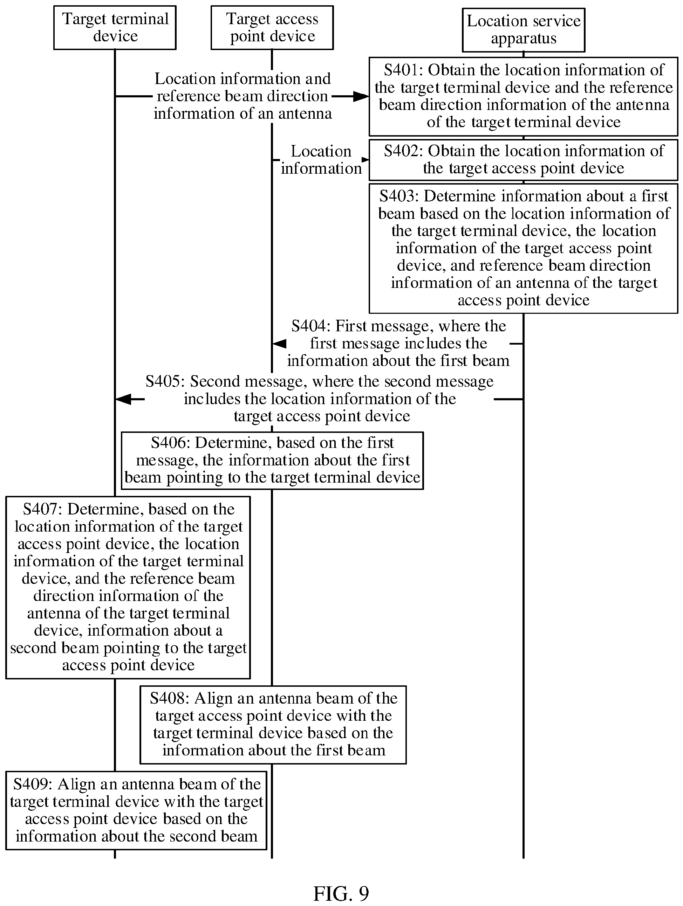

FIG. 9 is a schematic diagram of another embodiment of a beam alignment method according to an embodiment of this application. As shown in FIG. 9, the beam alignment method includes the following steps.

S401: The location service apparatus obtains the location information of the target terminal device and reference beam direction information of an antenna of the target terminal device.

In this embodiment, a manner in which the location service apparatus obtains the location information of the target terminal device is similar to that in step S101, and details are not described herein again.

S402: The location service apparatus obtains the location information of the target access point device.

In this embodiment, a manner in which the location service apparatus obtains the location information of the target access point device and reference beam direction information of an antenna of the target access point device is similar to that in step S102, and details are not described herein again.

S403: The location service apparatus determines the information about the first beam based on the location information of the target terminal device, the location information of the target access point device, and the reference beam direction information of the antenna of the target access point device.

In this embodiment, a manner in which the location service apparatus determines the information about the first beam based on the location information of the target terminal device, the location information of the target access point device, and the reference beam direction information of the antenna of the target access point device is similar to that in step S103, and details are not described herein again.

S404: The location service apparatus sends the first message to the target access point device.

In this embodiment, the location service apparatus sends the first message to the target access point device, where the first message includes the information that is about the first beam and that is determined in step S403.

S405: The location service apparatus sends the second message to the target terminal device.

In this embodiment, the location service apparatus sends the second message to the target terminal device, where the second message includes the location information that is of the target access point device and that is obtained in step S402.

It may be understood that in this embodiment, there is no necessary sequence between step S404 and step S405. Step S404 may be performed first, or step S405 may be performed first, or step S404 and step S405 may be simultaneously performed. This is not specifically limited herein.

S406: The target access point device determines, based on the first message, the information about the first beam pointing to the target terminal device.

In this embodiment, a manner in which the target access point device determines, based on the first message, the information about the first beam pointing to the target terminal device is similar to that in step S 107, and details are not described herein again.

S407: The target terminal device determines, based on the location information of the target access point device, the location information of the target terminal device, and the reference beam direction information of the antenna of the target terminal device, information about a second beam pointing to the target access point device.

In this embodiment, a manner in which the target terminal device determines, based on the location information of the target access point device, the location information of the target terminal device, and the reference beam direction information of the antenna of the target terminal device, the information about the second beam pointing to the target access point device is similar to that in step S206, and details are not described herein again.

It may be understood that, in this embodiment, there is no necessary sequence between step S406 and step S407. Step S406 may be performed first, or step S407 may be performed first, or step S406 and step S407 may be simultaneously performed. This is not specifically limited herein.

S408: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S 109, and details are not described herein again.

S409: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

It may be understood that in this embodiment, there is no necessary sequence between step S408 and step S409. Step S408 may be performed first, or step S409 may be performed first, or step S408 and step S409 may be simultaneously performed. This is not specifically limited herein.

2. A target access point device receives a first message sent by a location service apparatus, and a target terminal device receives a second message sent by the target access point device.

Specifically, in this embodiment, the first message may include location information of the target terminal device, or the first message may further include location information of the target terminal device and reference beam direction information of an antenna of the target terminal device. In addition, the second message may include location information of the target access point device, or the second message may further include information about a second beam.

Therefore, this embodiment further describes a case in which the first message and the second message include different information.
(1) The first message includes the location information of the target terminal device, and the second message includes the location information of the target access point device.

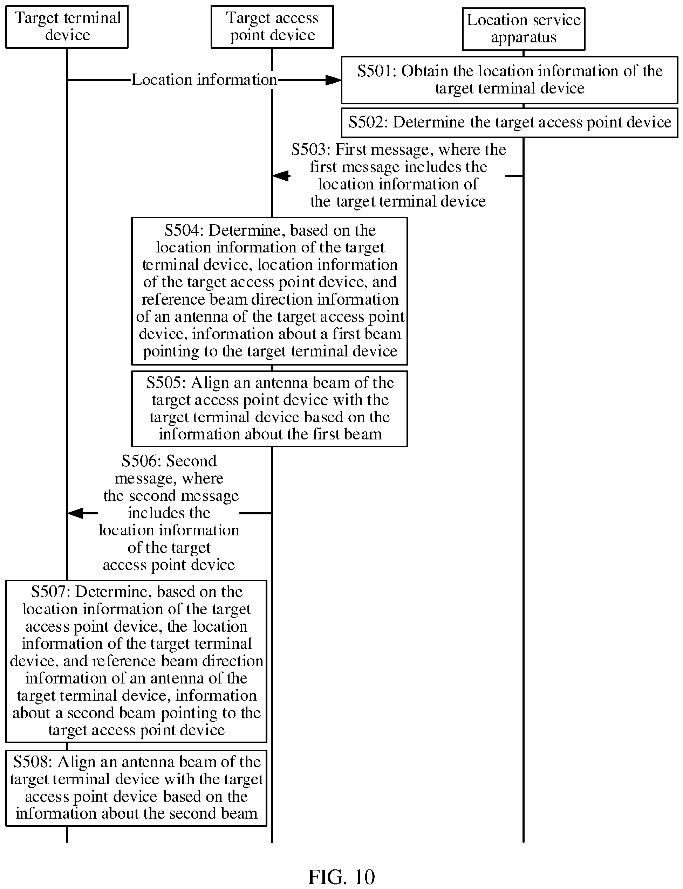

FIG. 10 is a schematic diagram of another embodiment of a beam alignment method according to an embodiment of this application. As shown in FIG. 10, the beam alignment method includes the following steps.

S501: The location service apparatus obtains the location information of the target terminal device.

In this embodiment, a manner in which the location service apparatus obtains the location information of the target terminal device is similar to that in step S101, and details are not described herein again.

S502: The location service apparatus determines the target access point device.

In this embodiment, the location service apparatus needs to obtain real-time information of each access point device, where the real-time information includes traffic information of each access point device or signal strength information of each access point device, and then determines, from a plurality of access point devices based on the location information that is of the target terminal device and that is obtained in step S501 and the real-time information, the target access point device that provides a management service for the target terminal device.

S503: The location service apparatus sends the first message to the target access point device.

In this embodiment, the location service apparatus sends the first message to the target access point device, where the first message includes the location information that is of the target terminal device and that is obtained in step S501.

S504: The target access point device determines, based on the location information of the target terminal device, the location information of the target access point device, and reference beam direction information of an antenna of the target access point device, information about a first beam pointing to the target terminal device.

In this embodiment, a manner in which the target access point device determines, based on the location information of the target terminal device, the location information of the target access point device, and the reference beam direction information of the antenna of the target access point device, the information about the first beam pointing to the target terminal device is similar to that in step S205, and details are not described herein again.

S505: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S 109, and details are not described herein again.

S506: The target access point device sends the second message to the target terminal device.

In this embodiment, the target access point device sends the second message to the target terminal device, where the second message includes the location information of the target access point device. Specifically, the target access point device may send the location information of the target access point device to the target terminal device in a wide beam broadcast manner.

S507: The target terminal device determines, based on the location information of the target access point device, the location information of the target terminal device, and the reference beam direction information of the antenna of the target terminal device, information about a second beam pointing to the target access point device.

In this embodiment, because the second message includes the location information of the target access point device, a manner in which the target terminal device may determine, based on the location information of the target access point device, the location information of the target terminal device, and the reference beam direction information of the antenna of the target terminal device, the information about the second beam pointing to the target access point device is similar to that in step S206, and details are not described herein again. Specifically, the target terminal device may receive, in the wide beam broadcast manner, the location information that is of the target access point device and that is sent by the target access point device, or determine the location information of the target access point device through millimeter wave positioning, or determine the location information of the target access point device in an auxiliary manner. The auxiliary manner includes but is not limited to an infrared manner, a Wi-Fi manner, and a sound manner.

S508: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

(2) The first message includes information about a first beam, and the second message includes the location information of the target access point device.

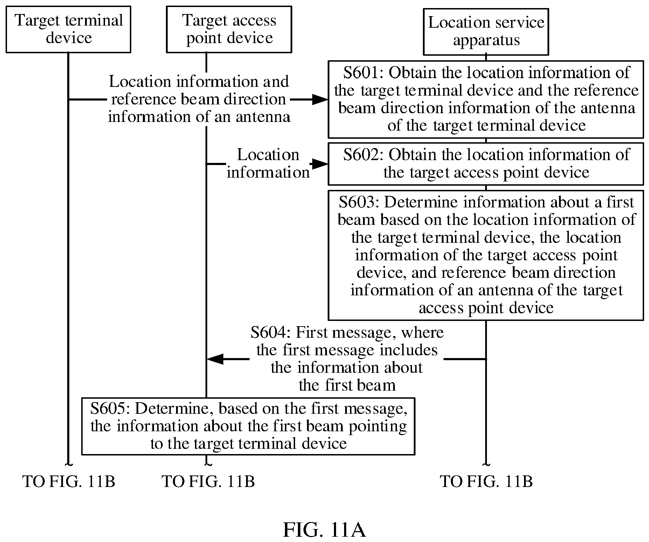

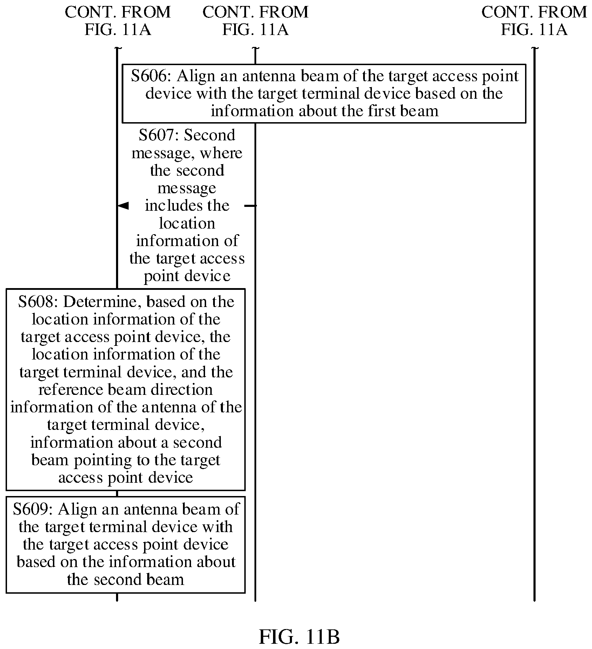

FIG. 11A and FIG. 11B are a schematic diagram of another embodiment of a beam alignment method according to an embodiment of this application. As shown in FIG. 11A and FIG. 11B, the beam alignment method includes the following steps.

S601: The location service apparatus obtains the location information of the target terminal device and the reference beam direction information of the antenna of the target terminal device.

In this embodiment, a manner in which the location service apparatus obtains the location information of the target terminal device and the reference beam direction information of the antenna of the target terminal device is similar to that in step S101, and details are not described herein again.

S602: The location service apparatus obtains the location information of the target access point device.

In this embodiment, a manner in which the location service apparatus obtains the location information of the target access point device and reference beam direction information of an antenna of the target access point device is similar to that in step S102, and details are not described herein again.

S603: The location service apparatus determines the information about the first beam based on the location information of the target terminal device, the location information of the target access point device, and the reference beam direction information of the antenna of the target access point device.

In this embodiment, a manner in which the location service apparatus determines the information about the first beam based on the location information of the target terminal device, the location information of the target access point device, and the reference beam direction information of the antenna of the target access point device is similar to that in step S103, and details are not described herein again.

S604: The location service apparatus sends the first message to the target access point device.

In this embodiment, the location service apparatus sends the first message to the target access point device, where the first message includes the information that is about the first beam and that is determined in step S603.

S605: The target access point device determines, based on the first message, the information about the first beam pointing to the target terminal device.

In this embodiment, a manner in which the target access point device determines, based on the first message, the information about the first beam pointing to the target terminal device is similar to that in step S107, and details are not described herein again.

S606: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

S607: The target access point device sends the second message to the target terminal device.

In this embodiment, the target access point device sends the second message to the target terminal device, where the second message includes the location information of the target access point device. Specifically, the target access point device may send the location information of the target access point device to the target terminal device in a wide beam broadcast manner.

S608: The target terminal device determines, based on the location information of the target access point device, the location information of the target terminal device, and the reference beam direction information of the antenna of the target terminal device, information about a second beam pointing to the target access point device.

In this embodiment, a manner in which the target terminal device determines, based on the location information of the target access point device, the location information of the target terminal device, and the reference beam direction information of the antenna of the target terminal device, the information about the second beam pointing to the target access point device is similar to that in step S507, and details are not described herein again.

S609: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

(3) The first message includes the location information of the target terminal device and the reference beam direction information of the antenna of the target terminal device, and the second message includes the information about the second beam.

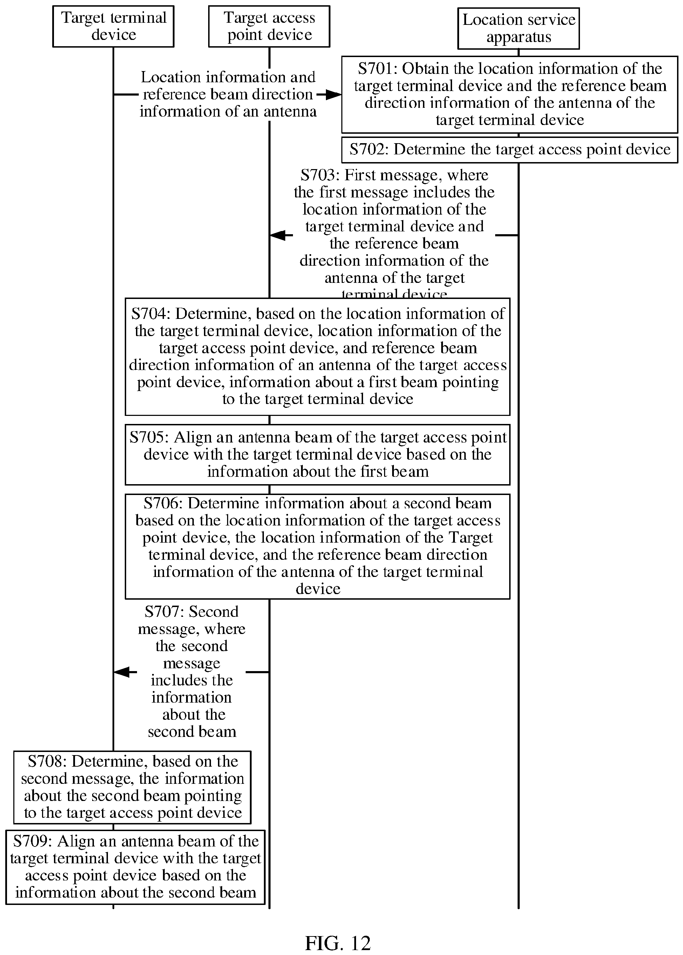

FIG. 12 is a schematic diagram of another embodiment of a beam alignment method according to an embodiment of this application. As shown in FIG. 12, the beam alignment method includes the following steps.

S701: The location service apparatus obtains the location information of the target terminal device and the reference beam direction information of the antenna of the target terminal device.

In this embodiment, a manner in which the location service apparatus obtains the location information of the target terminal device and the reference beam direction information of the antenna of the target terminal device is similar to that in step S101, and details are not described herein again.

S702: The location service apparatus determines the target access point device.

In this embodiment, a manner in which the location service apparatus determines the target access point device is similar to that in step S502, and details are not described herein again.

S703: The location service apparatus sends the first message to the target access point device.

In this embodiment, the location service apparatus sends the first message to the target access point device, where the first message includes the location information of the target terminal device and the reference beam direction information of the antenna of the target terminal device that are obtained in step S701.

S704: The target access point device determines, based on the location information of the target terminal device, the location information of the target access point device, and the reference beam direction information of the antenna of the target access point device, information about a first beam pointing to the target terminal device.

In this embodiment, because the first message includes the location information of the target terminal device, the target access point device may obtain the location information of the target terminal device based on the first message, and determine, based on the location information of the target terminal device, the location information of the target access point device, and the reference beam direction information of the antenna of the target access point device, the information about the first beam pointing to the target terminal device. Specifically, the information about the first beam includes direction information and angle information that are of an antenna beam, of the target access point device, pointing to the target terminal device.

S705: The target access point device aligns the antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

S706: The target access point device determines the information about the second beam based on the location information of the access point device, the location information of the terminal device, and the reference beam direction information of the antenna of the terminal device.

In this embodiment, because the first message not only includes the location information of the target terminal device, but also includes the reference beam direction information of the antenna of the target terminal device, the target access point device may determine the information about the second beam based on the location information of the access point device, the location information of the terminal device, and the reference beam direction information of the antenna of the terminal device. Specifically, the information about the second beam includes direction information and angle information that are of an antenna beam, of the target terminal device, pointing to the target access point device.

S707: The target access point device sends the second message to the target terminal device.

In this embodiment, the target access point device sends the second message to the target terminal device, where the second message includes the information that is about the second beam and that is determined in step S706.

S708: The target terminal device determines, based on the second message, the information about the second beam pointing to the target access point device.

In this embodiment, the target terminal device directly determines, based on the information that is about the second beam and that is included in the second message, the information about the second beam pointing to the target access point device.

S709: The target terminal device aligns the antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

3. A target access point device receives a first message sent by a target terminal device, and the terminal device receives a second message sent by a location service apparatus.

Specifically, in this embodiment, the first message may include location information of the target terminal device, or the first message may further include information about a first beam. In addition, the second message may include location information of the target access point device, or the second message may further include information about a second beam, or the second message may further include location information of the target access point device and reference beam direction information of an antenna of the target access point device.
(1) The first message includes the location information of the target terminal device, and the second message includes the location information of the target access point device.

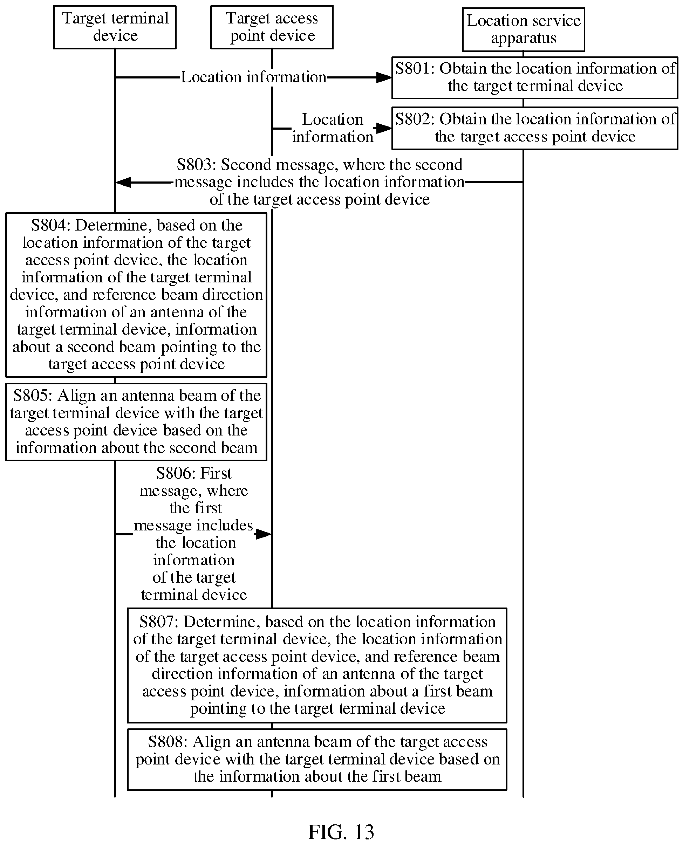

FIG. 13 is a schematic diagram of another embodiment of a beam alignment method according to an embodiment of this application. As shown in FIG. 13, the beam alignment method includes the following steps.

S801: The location service apparatus obtains the location information of the target terminal device.

In this embodiment, a manner in which the location service apparatus obtains the location information of the target terminal device is similar to that in step S101, and details are not described herein again.

S802: The location service apparatus obtains the location information of the target access point device.

In this embodiment, a manner in which the location service apparatus obtains the location information of the target access point device and the reference beam direction information of the antenna of the target access point device is similar to that in step S102, and details are not described herein again.

S803: The location service apparatus sends the second message to the target terminal device.

In this embodiment, the location service apparatus sends the second message to the target terminal device, where the second message includes the location information that is of the target access point device and that is obtained in step S203.

S804: The target terminal device determines, based on the location information of the target access point device, the location information of the target terminal device, and reference beam direction information of an antenna of the target terminal device, information about a second beam pointing to the target access point device.

In this embodiment, a manner in which the target terminal device determines, based on the location information of the target access point device, the location information of the target terminal device, and the reference beam direction information of the antenna of the target terminal device, the information about the second beam pointing to the target access point device is similar to that in step S206, and details are not described herein again.

S805: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

S806: The target terminal device sends the first message to the target access point device.

In this embodiment, after the location service apparatus determines, in step S802, the target access point device that provides a service for the target terminal device, the location service apparatus sends a registration message corresponding to the target access point device. When finding the registration message corresponding to the target access point device, the target terminal device may determine that the target access point device is an access point device that provides a service for the target terminal device. Therefore, the target terminal device sends the first message to the target access point device, where the first message includes the location information of the target terminal device. Specifically, the target terminal device may send the location information of the target terminal device in a wide beam broadcast manner, or report the location information of the target terminal device in an auxiliary manner, or report the location information of the target terminal device based on a positioning capability of the target terminal device.

S807: The target access point device determines, based on the location information of the target terminal device, the location information of the target access point device, and the reference beam direction information of the antenna of the target access point device, information about a first beam pointing to the target terminal device.

In this embodiment, because the first message includes the location information of the target terminal device, the target access point device may obtain the location information of the target terminal device based on the first message, and determine, based on the location information of the target terminal device, the location information of the target access point device, and the reference beam direction information of the antenna of the target access point device, the information about the first beam pointing to the target terminal device. Specifically, the information about the first beam includes direction information and angle information that are of an antenna beam, of the target access point device, pointing to the target terminal device.

S808: The target access point device aligns the antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

(2) The first message includes the location information of the target terminal device, and the second message includes the information about the second beam of the access point device.

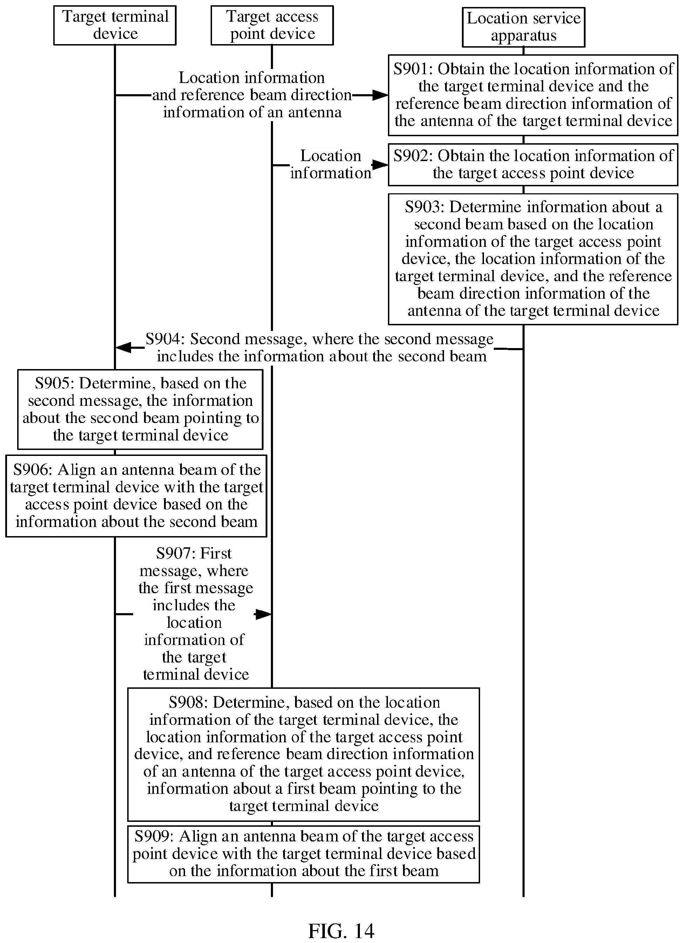

FIG. 14 is a schematic diagram of another embodiment of a beam alignment method according to an embodiment of this application. As shown in FIG. 14, the beam alignment method includes the following steps.

S901: The location service apparatus obtains the location information of the target terminal device.

In this embodiment, a manner in which the location service apparatus obtains the location information of the target terminal device is similar to that in step S101, and details are not described herein again.

S902: The location service apparatus obtains the location information of the target access point device.

In this embodiment, a manner in which the location service apparatus obtains the location information of the target access point device and the reference beam direction information of the antenna of the target access point device is similar to that in step S102, and details are not described herein again.

S903: The location service apparatus determines the information about the second beam based on the location information of the target access point device, the location information of the target terminal device, and reference beam direction information of an antenna of the target terminal device.

In this embodiment, a manner in which the location service apparatus determines the information about the second beam based on the location information of the target access point device, the location information of the target terminal device, and the reference beam direction information of the antenna of the target terminal device is similar to that in step S104, and details are not described herein again.

S904: The location service apparatus sends the second message to the target terminal device.

In this embodiment, the location service apparatus sends the second message to the target terminal device, where the second message includes the information that is about the second beam and that is determined in step S903.

S905: The target terminal device determines, based on the second message, the information about the second beam pointing to the target access point device.

In this embodiment, a manner in which the target terminal device determines, based on the second message, the information about the second beam pointing to the target access point device is similar to that in step S108, and details are not described herein again.

S906: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

S907: The target terminal device sends the first message to the target access point device.

In this embodiment, the target terminal device sends the first message to the target access point device, where the first message includes the location information of the target terminal device. Specifically, the target terminal device may send the location information of the target terminal device to the target access point device in a wide beam broadcast manner.

S908: The target access point device determines, based on the location information of the target terminal device, the location information of the target access point device, and the reference beam direction information of the antenna of the target access point device, information about a first beam pointing to the target terminal device.

In this embodiment, a manner in which the target access point device determines, based on the location information of the target terminal device, the location information of the target access point device, and the reference beam direction information of the antenna of the target access point device, the information about the first beam pointing to the target terminal device is similar to that in step S807, and details are not described herein again.

S909: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S 109, and details are not described herein again.

(3) The first message includes the information about the first beam, and the second message includes the location information of the target access point device and the reference beam direction information of the antenna of the target access point device.

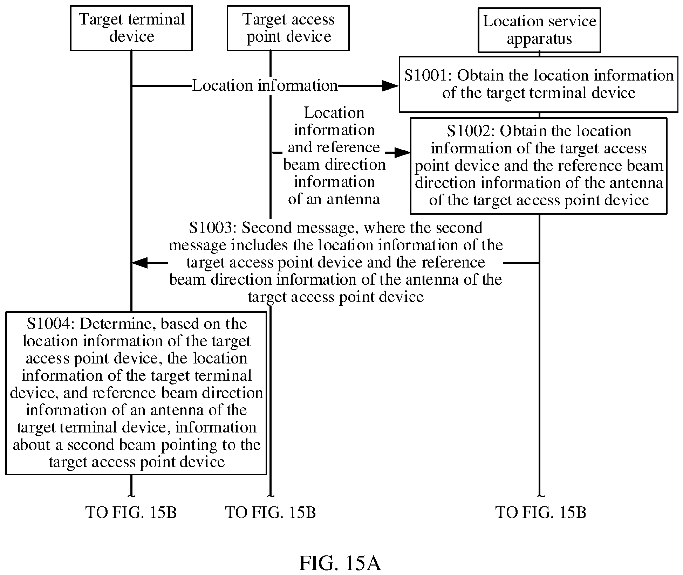

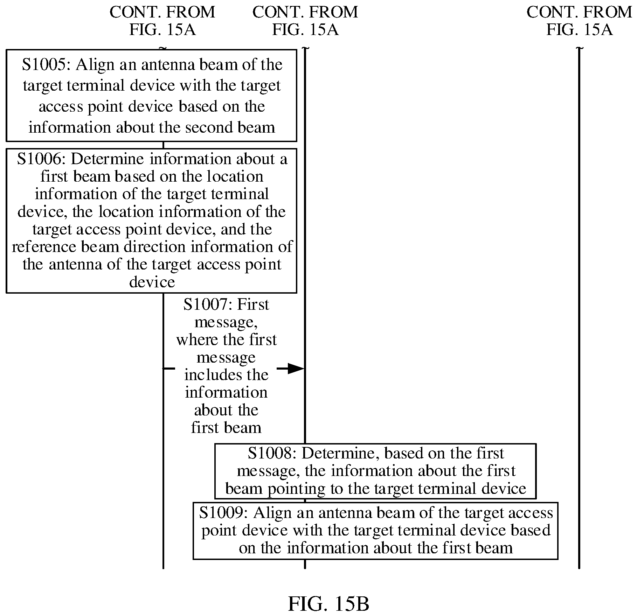

FIG. 15A and FIG. 15B are a schematic diagram of another embodiment of a beam alignment method according to an embodiment of this application. As shown in FIG. 15A and FIG. 15B, the beam alignment method includes the following steps.

S1001: The location service apparatus obtains the location information of the target terminal device and reference beam direction information of an antenna of the target terminal device.

In this embodiment, a manner in which the location service apparatus obtains the location information of the target terminal device and the reference beam direction information of the antenna of the target terminal device is similar to that in step S101, and details are not described herein again.

S1002: The location service apparatus obtains the location information of the target access point device and the reference beam direction information of the antenna of the target access point device.

In this embodiment, a manner in which the location service apparatus obtains the location information of the target access point device and the reference beam direction information of the antenna of the target access point device is similar to that in step S102, and details are not described herein again.

S1003: The location service apparatus sends the second message to the target terminal device.

In this embodiment, the location service apparatus sends the second message to the target terminal device, where the second message includes the location information of the target access point device and the reference beam direction information of the antenna of the target access point device that are obtained in step 51001.

S1004: The target terminal device determines, based on the location information of the target access point device, the location information of the target terminal device, and the reference beam direction information of the antenna of the target terminal device, information about a second beam pointing to the target access point device.

In this embodiment, because the second message includes the location information of the target access point device, the target access point device may obtain the location information of the target access point device based on the second message, and determine, based on the location information of the target access point device, the location information of the target terminal device, and the reference beam direction information of the antenna of the target terminal device, the information about the second beam pointing to the target access point device. Specifically, the information about the second beam includes direction information and angle information that are of an antenna beam, of the target terminal device, pointing to the target access point device.

S1005: The target terminal device aligns the antenna beam of the target terminal device with the target access point device based on the information about the second beam.

In this embodiment, a manner in which the target access point device aligns the antenna beam of the target terminal device with the target access point device based on the information about the second beam is similar to that in step S110, and details are not described herein again.

S1006: The target terminal device determines, based on the location information of the target terminal device, the location information of the target access point device, and the reference beam direction information of the antenna of the target access point device, the information about the first beam pointing to the target terminal device.

In this embodiment, because the second message not only includes the location information of the target access point device, but also includes the reference beam direction information of the antenna of the target access point device, the target terminal device may determine, based on the location information of the target terminal device, the location information of the target access point device, and the reference beam direction information of the antenna of the target access point device, the information about the first beam pointing to the target terminal device. Specifically, the information about the first beam includes direction information and angle information that are of an antenna beam, of the target access point device, pointing to the target terminal device.

S1007: The target terminal device sends the first message to the target access point device.

In this embodiment, the target terminal device sends the first message to the target access point device, where the first message includes the information that is about the first beam and that is determined in step S1006.

S1008: The target access point device determines, based on the first message, the information about the first beam pointing to the target terminal device.

In this embodiment, the target access point device directly determines, based on the information that is about the first beam and that is included in the first message, the information about the first beam pointing to the target terminal device.

S1009: The target terminal device aligns the antenna beam of the target access point device with the target terminal device based on the information about the first beam.

In this embodiment, a manner in which the target terminal device aligns the antenna beam of the target access point device with the target terminal device based on the information about the first beam is similar to that in step S109, and details are not described herein again.

4. A target access point device receives a first message sent by a target terminal device, and the target terminal device receives a second message sent by the target access point device.

Specifically, in this embodiment, the first message may include location information of the target terminal device, or the first message may further include information about a first beam, or the first message may further include location information of the target terminal device and reference beam direction information of an antenna of the target terminal device. In addition, the second message may include location information of the target access point device, or the second message may further include location information of the target access point device and reference beam direction information of an antenna of the target access point device.
(1) The first message includes the location information of the target terminal device, and the second message includes the location information of the target access point device.

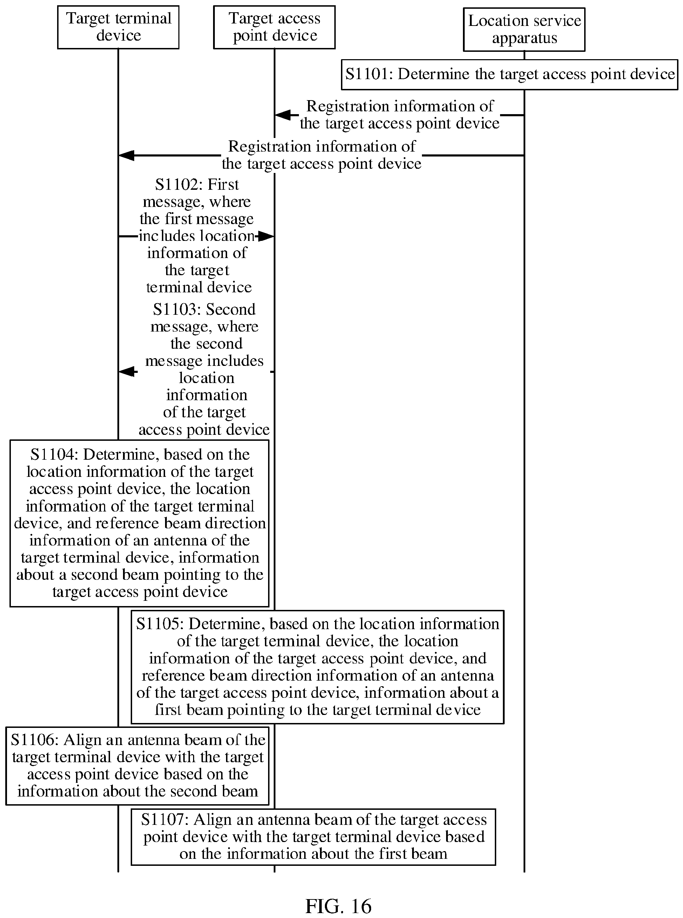

FIG. 16 is a schematic diagram of another embodiment of a beam alignment method according to an embodiment of this application. As shown in FIG. 16, the beam alignment method includes the following steps.

S1101: The location service apparatus determines the target access point device.

In this embodiment, the location service apparatus needs to obtain the location information of the target terminal device, and obtain real-time information of each access point device, where the real-time information includes traffic information of each access point device or signal strength information of each access point device, and then determines, from a plurality of access point devices based on the location information of the target terminal device and the real-time information, the target access point device that provides a management service for the target terminal device.

S1102: The target terminal device sends the first message to the target access point device.

In this embodiment, after the location service apparatus determines, in step S1101, the target access point device that provides the service for the target terminal device, the location service apparatus sends a registration message corresponding to the target access point device. When finding the registration message corresponding to the target access point device, the target terminal device may determine that the target access point device is an access point device that provides a service for the target terminal device. Therefore, the target terminal device sends the first message to the target access point device, where the first message includes the location information of the target terminal device.

51103: The target access point device sends the second message to the target terminal device.

In this embodiment, the target access point device sends the second message to the target terminal device, where the second message includes the location information of the target access point device. After the location service apparatus determines, in step S1101, the target access point device that provides the service for the target terminal device, the location service apparatus sends the registration message corresponding to the target access point device. Therefore, when receiving the registration message, the target access point device determines to provide the service for the target terminal device. Therefore, the target access point device sends the second message to the target terminal device, where the second message includes the location information of the target access point device.

It may be understood that, in this embodiment, there is no necessary sequence between step S1102 and step S1103. Step S1102 may be performed first, or step S1103 may be performed first, or step S1102 and step S1103 may be simultaneously performed. This is not specifically limited herein.

S1104: The target terminal device determines, based on the location information of the target access point device, the location information of the target terminal device, and the reference beam direction information of the antenna of the target terminal device, information about a second beam pointing to the target access point device.

In this embodiment, a manner in which the target terminal device determines, based on the location information of the target access point device, the location information of the target terminal device, and the reference beam direction information of the antenna of the target terminal device, the information about the second beam pointing to the target access point device is similar to that in step S206, and details are not described herein again.

S1105: The target access point device determines, based on the location information of the target terminal device, the location information of the target access point device, and the reference beam direction information of the antenna of the target access point device, information about a first beam pointing to the target terminal device.

In this embodiment, a manner in which the target access point device determines, based on the location information of the target terminal device, the location information of the target access point device, and the reference beam direction information of the antenna of the target access point device, the information about the first beam pointing to the target terminal device is similar to that in step S205, and details are not described herein again.

It may be understood that, in this embodiment, there is no necessary sequence between step S1104 and step S1105. Step S1104 may be performed first, or step S1105 may be performed first, or step S1104 and step S1105 may be simultaneously performed. This is not specifically limited herein.

S1106: The target terminal device aligns an antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

S1107: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

It may be understood that, in this embodiment, there is no necessary sequence between step S1106 and step S1107. Step S1106 may be performed first, or step S1107 may be performed first, or step S1106 and step S1107 may be simultaneously performed. This is not specifically limited herein.

(2) The first message includes the location information of the target terminal device and the reference beam direction information of the antenna of the target terminal device, and the second message includes information about a second beam.

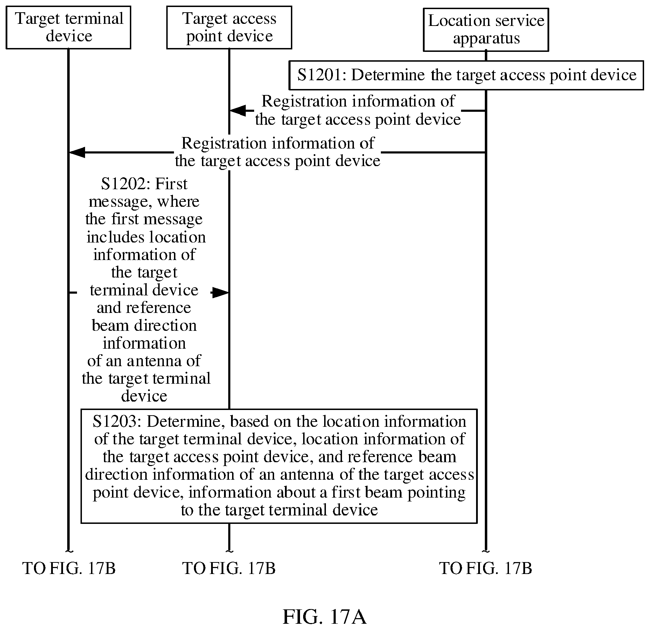

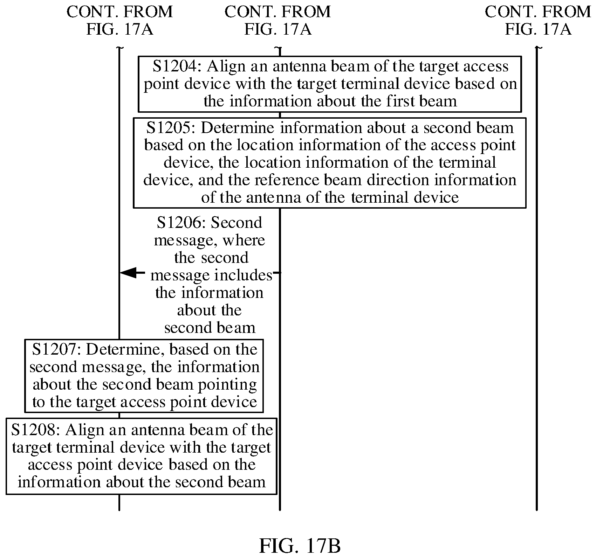

FIG. 17A and FIG. 17B are a schematic diagram of another embodiment of a beam alignment method according to an embodiment of this application. As shown in FIG. 17A and FIG. 17B, the beam alignment method includes the following steps.

S1201: The location service apparatus determines the target access point device.

In this embodiment, a manner in which the location service apparatus determines the target access point device is similar to that in step S1101, and details are not described herein again.

S1202: The target terminal device sends the first message to the target access point device.

In this embodiment, after the location service apparatus determines, in step S1201, the target access point device that provides a service for the target terminal device, the location service apparatus sends a registration message corresponding to the target access point device. When finding the registration message corresponding to the target access point device, the target terminal device may determine that the target access point device is an access point device that provides a service for the target terminal device. Therefore, the target terminal device sends the first message to the target access point device, where the first message includes the location information of the target terminal device and the reference beam direction information of the antenna of the target terminal device.

S1203: The target access point device determines, based on the location information of the target terminal device, the location information of the target access point device, and the reference beam direction information of the antenna of the target access point device, information about a first beam pointing to the target terminal device.

In this embodiment, a manner in which the target access point device determines, based on the location information of the target terminal device, the location information of the target access point device, and the reference beam direction information of the antenna of the target access point device, the information about the first beam pointing to the target terminal device is similar to that in step S205, and details are not described herein again.

S1204: The target access point device aligns an antenna beam of the target access point device with the target terminal device based on the information about the first beam.

In this embodiment, a manner in which the target access point device aligns the antenna beam of the target access point device with the target terminal device based on the information about the first beam is similar to that in step S109, and details are not described herein again.

S1205: The target access point device determines the information about the second beam based on the location information of the access point device, the location information of the terminal device, and the reference beam direction information of the antenna of the terminal device.

In this embodiment, because the first message not only includes the location information of the target terminal device, but also includes the reference beam direction information of the antenna of the target terminal device, the target access point device may determine the information about the second beam based on the location information of the access point device, the location information of the terminal device, and the reference beam direction information of the antenna of the terminal device. Specifically, the information about the second beam includes direction information and angle information that are of an antenna beam, of the target terminal device, pointing to the target access point device.

S1206: The target access point device sends the second message to the target terminal device.

In this embodiment, the target access point device sends the second message to the target terminal device, where the second message includes the information that is about the second beam and that is determined in step S1205.

S1207: The target terminal device determines, based on the second message, the information about the second beam pointing to the target access point device.

In this embodiment, the target terminal device directly determines, based on the information that is about the second beam and that is included in the second message, the information about the second beam pointing to the target access point device.

S1208: The target terminal device aligns the antenna beam of the target terminal device with the target access point device based on the information about the second beam.

In this embodiment, a manner in which the target terminal device aligns the antenna beam of the target terminal device with the target access point device based on the information about the second beam is similar to that in step S110, and details are not described herein again.

(3) The first message includes the information about the first beam, and the second message includes the location information of the target access point device and the reference beam direction information of the antenna of the target access point device.

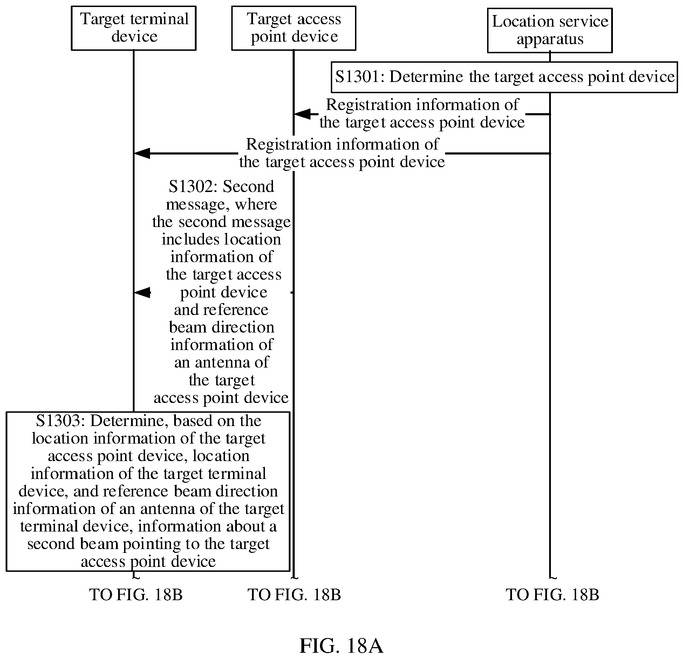

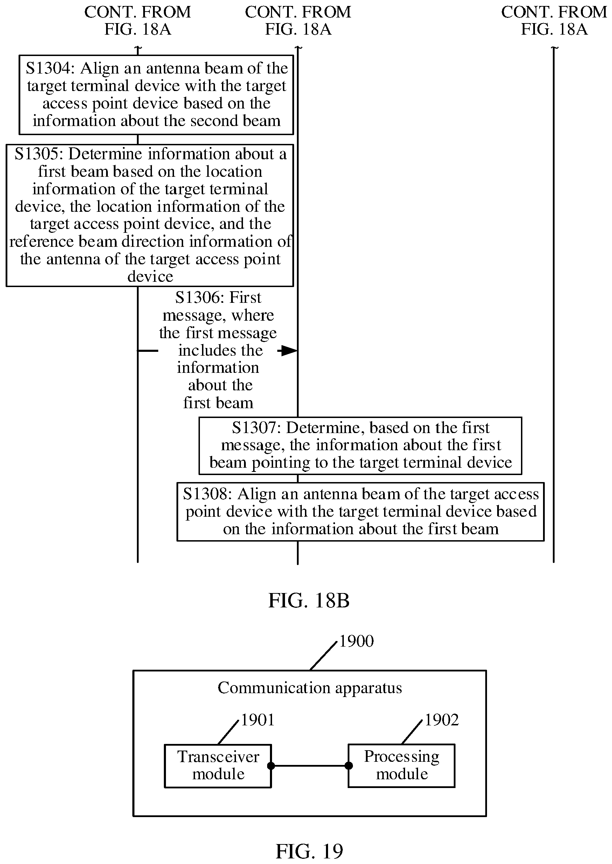

FIG. 18A and FIG. 18B are a schematic diagram of another embodiment of a beam alignment method according to an embodiment of this application. As shown in FIG. 18A and FIG. 18B, the beam alignment method includes the following steps.

S1301: The location service apparatus determines the target access point device.

In this embodiment, a manner in which the location service apparatus determines the target access point device is similar to that in step S1101, and details are not described herein again.

S1302: The target access point device sends the second message to the target terminal device.

In this embodiment, the target access point device sends the second message to the target terminal device, where the second message includes the location information of the target access point device. After the location service apparatus determines, in step S1301, the target access point device that provides a service for the target terminal device, the location service apparatus sends a registration message corresponding to the target access point device. Therefore, when receiving the registration message, the target access point device determines to provide the service for the target terminal device. Therefore, the target access point device sends the second message to the target terminal device, where the second message includes the location information of the target access point device and the reference beam direction information of the antenna of the target access point device.

S1303: The target terminal device determines, based on the location information of the access point device, the location information of the terminal device, and the reference beam direction information of the antenna of the terminal device, information about a second beam pointing to the target access point device.

In this embodiment, a manner in which the target terminal device determines, based on the location information of the access point device, the location information of the terminal device, and the reference beam direction information of the antenna of the terminal device, the information about the second beam pointing to the target access point device is similar to that in step S206, and details are not described herein again.

S1304: The target access point device aligns an antenna beam of the target terminal device with the target access point device based on the information about the second beam.

In this embodiment, a manner in which the target access point device aligns the antenna beam of the target terminal device with the target access point device based on the information about the second beam is similar to that in step S110, and details are not described herein again.

S1305: The target terminal device determines, based on the location information of the target terminal device, the location information of the target access point device, and the reference beam direction information of the antenna of the target access point device, the information about the first beam pointing to the target terminal device.

In this embodiment, because the second message not only includes the location information of the target access point device, but also includes the reference beam direction information of the antenna of the target access point device, the target terminal device may determine, based on the location information of the target terminal device, the location information of the target access point device, and the reference beam direction information of the antenna of the target access point device, the information about the first beam pointing to the target terminal device. Specifically, the information about the first beam includes direction information and angle information that are of an antenna beam, of the target access point device, pointing to the target terminal device.

S1306: The target terminal device sends the first message to the target access point device.

In this embodiment, the target terminal device sends the first message to the target access point device, where the first message includes the information that is about the first beam and that is determined in step S1305.

S1307: The target access point device determines, based on the first message, the information about the first beam pointing to the target terminal device.

In this embodiment, the target access point device directly determines, based on the information that is about the first beam and that is included in the first message, the information about the first beam pointing to the target terminal device.

S1308: The target terminal device aligns the antenna beam of the target access point device with the target terminal device based on the information about the first beam.

In this embodiment, a manner in which the target terminal device aligns the antenna beam of the target access point device with the target terminal device based on the information about the first beam is similar to that in step S109, and details are not described herein again.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should be easily aware that, in combination with the examples described in embodiments disclosed in this specification, modules and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

In this way, the following describes a communication apparatus in this application in detail. FIG. 19 is a schematic diagram of an embodiment of a communication apparatus according to an embodiment of this application. As shown in the figure, a communication apparatus 1900 includes a transceiver module 1901 and a processing module 1902.

Optionally, the communication apparatus 1900 may correspond to the access point device in the foregoing method embodiments, for example, may be an access point device, or a component (such as a circuit, a chip, or a chip system) configured in the access point device.

Optionally, the communication apparatus 1900 may correspond to the terminal device in the foregoing method embodiments, for example, may be a terminal device, or a component (such as a circuit, a chip, or a chip system) configured in the terminal device.

Optionally, the communication apparatus 1900 may correspond to the location service apparatus in the foregoing method embodiments, for example, may be a location service apparatus, or a component (such as a circuit, a chip, or a chip system) configured in the location service apparatus.

It should be understood that the communication apparatus 1900 may correspond to the methods in FIG. 4 to FIG. 18A and FIG. 18B according to embodiments of this application, or the communication apparatus 1900 may include units configured to perform the methods performed by the access point device, the terminal device, and the location service apparatus in FIG. 4 to FIG. 18A and FIG. 18B. In addition, the units in the communication apparatus 1900 and the foregoing other operations and/or functions are used to implement corresponding procedures of the methods in FIG. 4 to FIG. 18A and FIG. 18B. It should be understood that a specific process in which the units perform the foregoing corresponding steps is described in detail in the foregoing method embodiments, and for brevity, details are not described herein again.

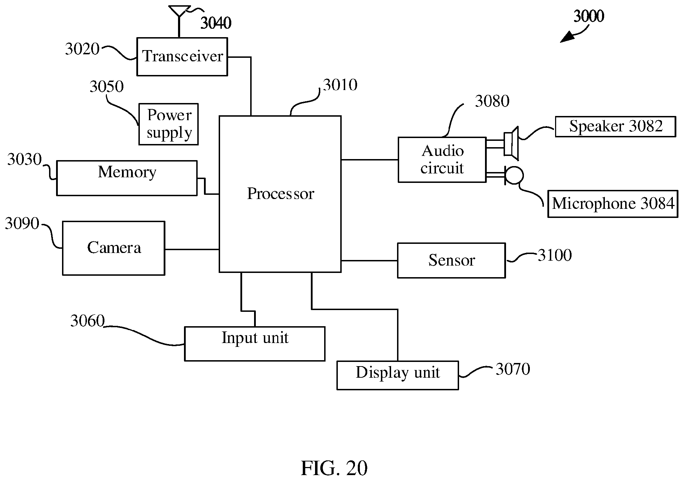

It should be further understood that, when the communication apparatus 1900 is a terminal device, the transceiver module 1901 in the communication apparatus 1900 may be implemented by a transceiver, for example, may correspond to a transceiver 3020 in a terminal device 3000 shown in FIG. 20. The processing module 1902 in the communication apparatus 1900 may be implemented by at least one processor, for example, may correspond to a processor 3010 in the terminal device 3000 shown in FIG. 20.

It should be further understood that when the communication apparatus 1900 is a chip or a chip system configured in the terminal device, the transceiver module 1901 in the communication apparatus 1900 may be implemented by an input/output interface, a circuit, or the like, and the processing module 1902 in the communication apparatus 1900 may be implemented by a processor, a microprocessor, an integrated circuit, or the like integrated in the chip or the chip system.

It should be further understood that, when the communication apparatus 1900 is an access point device or a location service apparatus, the transceiver module 1901 in the communication apparatus 1900 may be implemented by a transceiver, for example, may correspond to a transceiver unit 4100 in an access point device 4000 shown in FIG. 21. The processing module 1902 in the communication apparatus 1900 may be implemented by at least one processor, for example, may correspond to a processing unit 4200 or a processor 4202 in the access point device 4000 shown in FIG. 21.

It should be further understood that when the communication apparatus 1900 is a chip or a chip system configured in a terminal device, the transceiver module 1901 in the communication apparatus 1900 may be implemented by an input/output interface, a circuit, or the like, and the processing module 1902 in the communication apparatus 1900 may be implemented by a processor, a microprocessor, an integrated circuit, or the like integrated in the chip or the chip system.

It should be further understood that, when the communication apparatus 1900 is a chip or a chip system configured in the access point device or the location service apparatus, the transceiver module 1901 in the communication apparatus 1900 may be implemented by an input/output interface, a circuit, or the like, and the processing module 1902 in the communication apparatus 1900 may be implemented by a processor, a microprocessor, an integrated circuit, or the like integrated in the chip or the chip system.

FIG. 20 is a schematic structural diagram of a terminal device 3000 according to an embodiment of this application. The terminal device 3000 may be used in the system shown in FIG. 3, to perform functions of the terminal device in the foregoing method embodiments. As shown in the figure, the terminal device 3000 includes a processor 3010 and a transceiver 3020. Optionally, the terminal device 3000 further includes a memory 3030. The processor 3010, the transceiver 3020, and the memory 3030 may communicate with each other through an internal connection path, to transfer a control signal and/or a data signal. The memory 3030 is configured to store a computer program. The processor 3010 is configured to invoke the computer program from the memory 3030 and run the computer program, to control the transceiver 3020 to send and receive a signal. Optionally, the terminal device 3000 may further include an antenna 3040, configured to send, through a radio signal, uplink data or uplink control signaling output by the transceiver 3020.

The processor 3010 and the memory 3030 may be combined into one communication apparatus. The processor 3010 is configured to execute program code stored in the memory 3030 to implement the foregoing functions. During specific implementation, the memory 3030 may alternatively be integrated into the processor 3010, or may be independent of the processor 3010. The processor 3010 may correspond to the processing module 1902 in FIG. 19.

The transceiver 3020 may correspond to the transceiver module 1901 in FIG. 19. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that, the terminal device 3000 shown in FIG. 20 can implement the processes related to the terminal device in the method embodiments shown in FIG. 4 to FIG. 18A and FIG. 18B. Operations and/or functions of the modules in the terminal device 3000 are used to implement corresponding procedures in the foregoing method embodiments. For details, refer to the descriptions in the foregoing method embodiments. To avoid repetition, detailed descriptions are properly omitted herein.

The processor 3010 may be configured to perform an action that is implemented inside the terminal device and that is described in the foregoing method embodiments, and the transceiver 3020 may be configured to perform an action of sending to the access point device or receiving from the access point device that is performed by the terminal device and that is described in the foregoing method embodiments. For details, refer to the descriptions in the foregoing method embodiments. Details are not described herein again.

Optionally, the terminal device 3000 may further include a power supply 3050, configured to supply power to various components or circuits in the terminal device.

In addition, to improve functions of the terminal device, the terminal device 3000 may further include one or more of an input unit 3060, a display unit 3070, an audio circuit 3080, a camera 3090, a sensor 3100, and the like. The audio circuit may further include a speaker 3082, a microphone 3084, and the like.

FIG. 21 is a schematic structural diagram of an access point device according to an embodiment of this application. For example, FIG. 21 may be a schematic structural diagram of an AP in a Wi-Fi system. An AP 4000 may be used in the system shown in FIG. 3, to perform functions of the access point device in the foregoing method embodiments. As shown in the figure, the AP 4000 may include one or more transceiver units 4100, and the transceiver unit 4100 may correspond to the transceiver module 1901 in FIG. 19. Optionally, the transceiver unit 4100 may also be referred to as a transceiver, a transceiver circuit, a transceiver, or the like. Optionally, the transceiver unit 4100 may include a receiving unit and a sending unit. The receiving unit may correspond to a receiver (or referred to as a receiving machine or a receiver circuit), and the sending unit may correspond to a transmitter (or referred to as a transmitting machine or a transmitter circuit). The transceiver unit 4100 is mainly configured to send and receive a radio frequency signal, and perform conversion between the radio frequency signal and a baseband signal, for example, configured to send a first message to a terminal device.

The processing unit 4200 is mainly configured to: perform baseband processing, control the AP, and the like. The processing unit 4200 may correspond to the processing module 1902 in FIG. 19. The processing unit 4200 may be configured to control the AP to perform an operation procedure related to the access point device in the foregoing method embodiments.

In an example, the processing unit 4200 further includes a memory 4201 and a processor 4202. The memory 4201 is configured to store necessary instructions and data. The processor 4202 is configured to control the AP to perform a necessary action, for example, is configured to control the AP to perform an operation procedure related to the access point device in the foregoing method embodiments. The processing module 4202 may be a processor, for example, a baseband processor. The memory 4201 and the processor 4202 may serve one or more boards. In other words, a memory and a processor may be disposed on each board. Alternatively, a plurality of boards may share a same memory and a same processor. In addition, a necessary circuit may further be disposed on each board.

It should be understood that, the AP 4000 shown in FIG. 21 can implement processes related to the access point device or the location service apparatus in the method embodiments shown in FIG. 4 to FIG. 18A and FIG. 18B. Operations and/or functions of modules in the AP 4000 are used to implement corresponding procedures in the foregoing method embodiments. For details, refer to the descriptions in the foregoing method embodiments. To avoid repetition, detailed descriptions are properly omitted herein.

The processing unit 4200 may be configured to perform an action that is implemented inside the access point device or the location service apparatus and that is described in the foregoing method embodiments, and the transceiver unit 4100 may be configured to perform an action that is sent by the access point device or the location service apparatus to the terminal device or received from the terminal device and that is described in the foregoing method embodiments. For details, refer to the descriptions in the foregoing method embodiments. Details are not described herein again.

It should be understood that the AP 4000 shown in FIG. 21 is merely a possible form of the access point device, and shall not constitute any limitation on this application.

This application further provides a communication apparatus, including at least one processor. The at least one processor is configured to execute a computer program stored in a memory, so that the communication apparatus performs the method performed by the access point device, the terminal device, and the location service apparatus in any one of the foregoing method embodiments.

It should be understood that the communication apparatus may be one or more chips. For example, the communication apparatus may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller (micro controller unit, MCU), a programmable controller (programmable logic device, PLD), or another integrated chip.

An embodiment of this application further provides a communication apparatus, including a processor and a communication interface. The communication interface is coupled to the processor. The communication interface is configured to input and/or output information. The information includes at least one of instructions and data. The processor is configured to execute a computer program, so that the communication apparatus performs the method performed by the access point device, the terminal device, and the location service apparatus in any one of the foregoing method embodiments.

An embodiment of this application further provides a communication apparatus, including a processor and a memory. The memory is configured to store a computer program, and the processor is configured to invoke the computer program from the memory and run the computer program, so that the communication apparatus performs the method performed by the access point device, the terminal device, and the location service apparatus in any one of the foregoing method embodiments.

In an implementation process, steps in the foregoing methods can be implemented through a hardware integrated logical circuit in the processor, or through instructions in a form of software. Steps of the methods disclosed with reference to embodiments of this application may be directly executed and completed by a hardware processor, or may be executed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented through a hardware integrated logical circuit in the processor, or through instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the access point device, the method performed by the terminal device, and the method performed by the location service apparatus in embodiments shown in FIG. 4 to FIG. 18A and FIG. 18B.

According to the methods provided in embodiments of this application, this application further provides a computer-readable storage medium. The computer-readable storage medium stores program code. When the program code is run on a computer, the computer is enabled to perform the method performed by the access point device, the method performed by the terminal device, and the method performed by the location service apparatus in embodiments shown in FIG. 4 to FIG. 18A and FIG. 18B.

According to the methods provided in embodiments of this application, this application further provides a system, including the foregoing one or more access point devices, one or more terminal devices, and one or more location service apparatuses.

The access point device, the terminal device, and the location service apparatus in the foregoing apparatus embodiments completely correspond to the access point device, the terminal device, and the location service apparatus in the method embodiments, and corresponding modules or units perform corresponding steps. For example, a communication unit (a transceiver) performs a receiving or sending step in the method embodiments, and a processing unit (a processor) may perform a step other than sending and receiving. For a function of a specific unit, refer to corresponding method embodiments. There may be one or more processors.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam alignment method, comprising:
receiving, by an access point device, a first message;
determining, by the access point device based on the first message, information about a first beam pointing to a target terminal device; and
aligning, by the access point device, an antenna beam of the access point device with the target terminal device based on the information about the first beam.

2. The method according to claim 1, wherein the first message comprises location information of the terminal device; and
the determining, by the access point device based on the first message, information about a first beam pointing to a target terminal device comprises:
determining, by the access point device, the information about the first beam based on the location information of the terminal device, location information of the access point device, and reference beam direction information of an antenna of the access point device.

3. The method according to claim 2, wherein the reference beam direction information of the antenna of the access point device comprises any one of direction information of a normal line of the antenna of the access point device, information about a direction perpendicular to the normal line of the antenna of the access point device, or information about a direction that has a preset included angle with the normal line of the antenna of the access point device.

4. The method according to claim 1, wherein the first message comprises the information about the first beam.

5. The method according to any one of claims 1 to 4, wherein the method further comprises:
sending, by the access point device, a second message to the target terminal device, so that the target terminal device determines, based on the second message, information about a second beam pointing to the access point device.

6. The method according to claim 5, wherein the first message comprises the location information of the terminal device and reference beam direction information of an antenna of the terminal device;
the second message comprises the information about the second beam; and
the method further comprises:
determining, by the access point device, the information about the second beam based on the location information of the access point device, the location information of the terminal device, and the reference beam direction information of the antenna of the terminal device.

7. The method according to claim 6, wherein the reference beam direction information of the antenna of the terminal device comprises any one of direction information of a normal line of the antenna of the terminal device, information about a direction perpendicular to the normal line of the antenna of the terminal device, or information about a direction that has a preset included angle with the normal line of the antenna of the terminal device.

8. The method according to claim 5, wherein the second message comprises the location information of the access point device.

9. A beam alignment method, comprising:
receiving, by a terminal device, a second message;
determining, by the terminal device based on the second message, information about a second beam pointing to a target access point device; and
aligning, by the terminal device, an antenna beam of the terminal device with the target access point device based on the information about the second beam.

10. The method according to claim 9, wherein the second message comprises location information of the target access point device; and
the determining, by the terminal device based on the second message, information about a second beam pointing to a target access point device comprises:
determining, by the terminal device, the information about the second beam based on the location information of the target access point device, location information of the terminal device, and reference beam direction information of an antenna of the terminal device.

11. The method according to claim 9 or 10, wherein the method further comprises:
sending, by the terminal device, a first message to the target access point device, so that the target access point device determines, based on the first message, information about a first beam pointing to the terminal device.

12. The method according to claim 11, wherein the second message comprises the location information of the target access point device and reference beam direction information of an antenna of the target access point device;
the first message comprises the information about the first beam; and
the method further comprises:
determining, by the terminal device, the information about the first beam based on the location information of the terminal device, the location information of the target access point device, and the reference beam direction information of the antenna of the target access point device.

13. An information transmission method, comprising:
sending, by a location service apparatus, a first message to a target access point device, so that the target access point device determines, based on the first message, information about a first beam pointing to a target terminal device; and
sending, by the location service apparatus, a second message to the target terminal device, so that the target terminal device determines, based on the second message, information about a second beam pointing to the target access point device.

14. The method according to claim 13, wherein the first message comprises the information about the first beam; and
the method further comprises:
obtaining, by the location service apparatus, location information of the target terminal device;
obtaining, by the location service apparatus, location information of the target access point device and reference beam direction information of an antenna of the target access point device; and
determining, by the location service apparatus, the information about the first beam based on the location information of the target terminal device, the location information of the target access point device, and the reference beam direction information of the antenna of the target access point device.

15. The method according to claim 13, wherein the second message comprises the information about the second beam; and
the method further comprises:
obtaining, by the location service apparatus, location information of the target access point device;
obtaining, by the location service apparatus, location information of the target terminal device and reference beam direction information of an antenna of the target terminal device; and
determining, by the location service apparatus, the information about the second beam based on the location information of the target access point device, the location information of the target terminal device, and the reference beam direction information of the antenna of the target terminal device.

16. A communication apparatus, comprising:
a transceiver module, configured to receive a first message; and
a processing module, configured to determine, based on the first message, information about a first beam pointing to a target terminal device, wherein
the processing module is further configured to align an antenna beam of the communication apparatus with the target terminal device based on the information about the first beam.

17. The communication apparatus according to claim 16, wherein the first message comprises location information of the terminal device; and
the processing module is specifically configured to determine the information about the first beam based on the location information of the terminal device, location information of the communication apparatus, and reference beam direction information of an antenna of the communication apparatus.

18. The communication apparatus according to claim 17, wherein the reference beam direction information of the antenna of the communication apparatus comprises any one of direction information of a normal line of the antenna of the communication apparatus, information about a direction perpendicular to the normal line of the antenna of the communication apparatus, or information about a direction that has a preset included angle with the normal line of the antenna of the communication apparatus.

19. The communication apparatus according to claim 16, wherein the first message comprises the information about the first beam.

20. The communication apparatus according to any one of claims 16 to 19, wherein the transceiver module is further configured to send a second message to the target terminal device, so that the target terminal device determines, based on the second message, information about a second beam pointing to the communication apparatus.

21. The communication apparatus according to claim 20, wherein the first message comprises the location information of the terminal device and reference beam direction information of an antenna of the terminal device;
the second message comprises the information about the second beam; and
the processing module is further configured to determine the information about the second beam based on the location information of the communication apparatus, the location information of the terminal device, and the reference beam direction information of the antenna of the terminal device.

22. The communication apparatus according to claim 21, wherein the reference beam direction information of the antenna of the terminal device comprises any one of direction information of a normal line of the antenna of the terminal device, information about a direction perpendicular to the normal line of the antenna of the terminal device, or information about a direction that has a preset included angle with the normal line of the antenna of the terminal device.

23. The communication apparatus according to claim 20, wherein the second message comprises the location information of the communication apparatus.

24. A communication apparatus, comprising:
a transceiver module, configured to receive a second message; and
a processing module, configured to determine, based on the second message, information about a second beam pointing to a target access point device, wherein
the processing module is further configured to align an antenna beam of the communication apparatus with the target access point device based on the information about the second beam.

25. The communication apparatus according to claim 24, wherein the second message comprises location information of the target access point device; and
the processing module is specifically configured to determine the information about the second beam based on the location information of the target access point device, location information of the communication apparatus, and reference beam direction information of an antenna of the communication apparatus.

26. The communication apparatus according to claim 24 or 25, wherein the transceiver module is further configured to send a first message to the target access point device, so that the target access point device determines, based on the first message, information about a first beam pointing to the communication apparatus.

27. The communication apparatus according to claim 26, wherein the second message comprises the location information of the target access point device and reference beam direction information of an antenna of the target access point device;
the first message comprises the information about the first beam; and
the processing module is further configured to determine the information about the first beam based on the location information of the communication apparatus, the location information of the target access point device, and the reference beam direction information of the antenna of the target access point device.

28. A communication apparatus, comprising:
a transceiver module, configured to send a first message to a target access point device, so that the target access point device determines, based on the first message, information about a first beam pointing to a target terminal device, wherein
the transceiver module is further configured to send a second message to the target terminal device, so that the target terminal device determines, based on the second message, information about a second beam pointing to the target access point device.

29. The communication apparatus according to claim 28, wherein the first message comprises the information about the first beam;
the communication apparatus further comprises a processing module;
the transceiver module is further configured to obtain location information of the target terminal device;
the transceiver module is further configured to obtain location information of the target access point device and reference beam direction information of an antenna of the target access point device; and
the processing module is configured to determine the information about the first beam based on the location information of the target terminal device, the location information of the target access point device, and the reference beam direction information of the antenna of the target access point device.

30. The communication apparatus according to claim 28, wherein the second message comprises the information about the second beam;
the transceiver module is further configured to obtain location information of the target access point device;
the transceiver module is further configured to obtain location information of the target terminal device and reference beam direction information of an antenna of the target terminal device; and
the processing module is further configured to determine the information about the second beam based on the location information of the target access point device, the location information of the target terminal device, and the reference beam direction information of the antenna of the target terminal device.

31. An access point device, comprising:
a processor, a memory, and an input/output (I/O) interface, wherein
the processor is coupled to the memory and the input/output interface; and
the processor executes the method according to any one of claims 1 to 8 by running code in the memory.

32. A terminal device, comprising:
a processor, a memory, and an input/output (I/O) interface, wherein
the processor is coupled to the memory and the input/output interface; and
the processor executes the method according to any one of claims 9 to 12 by running code in the memory.

33. A location service device, comprising:
a processor, a memory, and an input/output (I/O) interface, wherein
the processor is coupled to the memory and the input/output interface; and
the processor executes the method according to any one of claims 13 to 15 by running code in the memory.

34. A computer-readable storage medium, comprising instructions, wherein when the instructions are run on a computer, the computer is enabled to perform the method according to any one of claims 1 to 8, perform the method according to any one of claims 9 to 12, or perform the method according to any one of claims 13 to 15.

35. A chip, wherein the chip comprises at least one processor, the at least one processor is communicatively connected to at least one memory, the at least one memory stores instructions, and the instructions are used by the at least one processor to perform the method according to any one of claims 1 to 8, perform the method according to any one of claims 9 to 12, or perform the method according to any one of claims 13 to 15.

36. A communication system, comprising an access point device, a terminal device, and a location service device, wherein the access point device performs the method according to any one of claims 1 to 8, the terminal device performs the method according to any one of claims 9 to 12, and the location service device performs the method according to any one of claims 13 to 15.
